(19) Europäisches Patentamt
European Patent Office
Office européen des brevets

(11) EP 4 663 838 A1

(12) EUROPEAN PATENT APPLICATION
published in accordance with Art. 153(4) EPC

(43) Date of publication:
17.12.2025 Bulletin 2025/51

(51) International Patent Classification (IPC):
D06F 37/30 (2020.01)     D06F 37/06 (2006.01)
D06F 37/26 (2006.01)     F24F 1/02 (2019.01)
F25D 31/00 (2006.01)     A47L 9/00 (2006.01)

(21) Application number: 24815840.4

(22) Date of filing: 28.05.2024

(52) Cooperative Patent Classification (CPC):
A47L 9/00; D06F 37/06; D06F 37/26; D06F 37/30;
F24F 1/02; F25D 31/00; H02K 1/2791; H02K 21/22

(86) International application number:
PCT/KR2024/007256

(87) International publication number:
WO 2024/248464 (05.12.2024 Gazette 2024/49)

(84) Designated Contracting States:
AL AT BE BG CH CY CZ DE DK EE ES FI FR GB
GR HR HU IE IS IT LI LT LU MC ME MK MT NL
NO PL PT RO RS SE SI SK SM TR
Designated Extension States:
BA
Designated Validation States:
GE KH MA MD TN

(30) Priority: 02.06.2023 JP 2023091914

(71) Applicant: Samsung Electronics Co., Ltd.
Suwon-si, Gyeonggi-do 16677 (KR)

(72) Inventors:
• KAZAMA, Osamu
Suwon-si, Gyeonggi-do 16677 (KR)
• SONODA, Yasuyuki
Suwon-si, Gyeonggi-do 16677 (KR)
• OSADA, Shunichi
Suwon-si, Gyeonggi-do 16677 (KR)

(74) Representative: Gulde & Partner
Patent- und Rechtsanwaltskanzlei mbB
Berliner Freiheit 2
10785 Berlin (DE)

(54) **WASHING MACHINE INCLUDING SURFACE PERMANENT MAGNET SYNCHRONOUS MOTOR**

(57) Disclosed is a washing machine including a motor for suppressing an increase in the harmonic components of cogging torque even if magnetization unbalance occurs. The motor of the washing machine includes: a rotor rotating around a rotary shaft; and a stator facing the rotor with an air gap interposed therebetween, wherein the rotor includes an annular magnetic pole body in which a plurality of magnets having an arc-shaped cross section are disposed in the circumferential direction of the rotor, and the annular magnetic pole body includes at least two types of magnets having different numbers of magnetic poles.

FIG. 14

EP 4 663 838 A1

## Description

BACKGROUND

Embodiments of the disclosure relate to appliances having surface permanent magnet synchronous motors (SPMSM).

Generally, washing machines use a motor to rotate a washing tub. As a motor, a surface permanent magnet synchronous motor (SPMSM) has been commonly adopted. When a washing machine is in operation, the motor is driven over a wide range of rotation speeds from a low rotation speed (e.g., 45 revolutions per minute (RPM)) during washing to a high rotation speed (e.g., 1200 RPM) during spinning. At high rotation speeds, noise generated by the SPMSM an integer multiple of a rotation speed may be undesirably loud.

One of the causes for noise is cogging torque (equivalent to a magnetic attractive force generated when rotating a rotor in a demagnetized state). Therefore, to address the noise problem, the cogging torque is suppressed by designing the shape of a magnet or core and the like differently. However, in mass-produced SPMSMs, noise may be caused due to small gaps during manufacturing, and the cause for noise is unclear.

Therefore, there is a need for a method of suppressing an increase in harmonic components of cogging torque, which causes noise in SPMSMs.

SUMMARY

According to an embodiment of the disclosure, a washing machine including a motor with an annular magnetic pole body is provided. According to one embodiment of the disclosure, the washing machine may include a casing, a laundry inlet configured to load laundry on a top or side of the casing, a door attached to the laundry inlet, a stationary tub capable of storing water for washing the laundry, a rotary tub formed as a container within the stationary tub and configured to be rotatable, and a motor configured to rotate the rotary tub. According to an embodiment of the disclosure, the motor of the washing machine may include a rotor configured to rotate about a rotation axis. According to an embodiment of the disclosure, the motor of the washing machine may include a stator configured to face the rotor with an air gap therebetween. According to an embodiment of the disclosure, in the motor of the washing machine, the rotor may include an annular magnetic pole body in which a plurality of magnets having an arc-shaped cross-section are arranged in a circumferential direction of the rotor. According to an embodiment of the disclosure, the annular magnetic pole body included in the motor of the washing machine may include two or more types of magnets having different numbers of magnetic poles.

According to an embodiment of the disclosure, a home appliance including a motor with an annular magnetic pole body is provided. According to an embodiment of the disclosure, the motor of the home appliance may include a rotor configured to rotate about a rotation axis. According to an embodiment of the disclosure, the motor of the home appliance may include a stator facing the rotor with an air gap therebetween. According to an embodiment of the disclosure, in the motor of the home appliance, the rotor may include an annular magnetic pole body in which a plurality of magnets having an arc-shaped cross-section are arranged in a circumferential direction of the rotor. According to an embodiment of the disclosure, the annular magnetic pole body included in the motor of the home appliance may include two or more types of magnets having different numbers of magnetic poles.

BRIEF DESCRIPTION OF DRAWINGS

FIG. 1A is a diagram illustrating a configuration of a washing machine employing a motor including an annular magnetic pole body, according to an embodiment of the disclosure.
FIG. 1B is a schematic cross-sectional view illustrating a configuration of a surface permanent magnet synchronous motor.
FIG. 2A is a diagram illustrating a method of magnetizing an annular magnetic pole body.
FIG. 2B is a diagram illustrating a position relationship of a magnet during magnetization in an annular magnetic pole body.
FIG. 3 is a graph illustrating a change in cogging torque due to misalignment of an annular magnetic pole body, according to an embodiment of the disclosure.
FIG. 4 is a graph illustrating a relationship between the degree of magnetization imbalance and harmonic components of cogging torque, according to an embodiment of the disclosure.
FIG. 5 is an unfolded view illustrating an example of an improved annular magnetic pole body in a motor, according to an embodiment of the disclosure.
FIG. 6 illustrates another example (a second pattern) of an improved annular magnetic pole body, according to an embodiment of the disclosure.
FIG. 7 is a diagram illustrating cogging torque when using an improved annular magnetic pole body, according to an embodiment of the disclosure.
FIG. 8 is a graph illustrating cogging torque according to a first pattern, according to an embodiment of the disclosure.
FIG. 9 is a graph illustrating cogging torque according to a second pattern, according to an embodiment of the disclosure.
FIG. 10 is a mathematical equation related to cogging torque, according to an embodiment of the disclosure.
FIG. 11 is a table summarizing a pole pitch and an out-of-phase pitch according to pole-slot combinations.

FIG. 12 is a diagram illustrating a configuration of cogging torque when there is no magnetization imbalance in a motor of the related art.

FIG. 13 is a diagram illustrating cogging torque when there is magnetization imbalance in a motor of the related art.

FIG. 14 is a diagram illustrating cogging torque for a motor according to an embodiment of the disclosure.

FIG. 15 is a configuration table of an annular magnetic pole body in a motor of the related art.

FIG. 16 is a configuration table of an annular magnetic pole body according to an embodiment of the disclosure.

FIG. 17 is a configuration table of an annular magnetic pole body according to an embodiment of the disclosure.

FIG. 18 is a configuration table of an annular magnetic pole body according to an embodiment of the disclosure.

FIG. 19 is a configuration table of an annular magnetic pole body according to an embodiment of the disclosure.

FIG. 20 is a configuration table of an annular magnetic pole body according to an embodiment of the disclosure.

FIG. 21 is a configuration table of an annular magnetic pole body according to an embodiment of the disclosure.

FIG. 22 is a configuration table of an annular magnetic pole body according to an embodiment of the disclosure.

FIG. 23A is a perspective view of a refrigerator employing a motor including an annular magnetic pole body, according to an embodiment of the disclosure.

FIG. 23B is a front view illustrating the interior of a refrigerator employing a motor including an annular magnetic pole body, according to an embodiment of the disclosure.

FIG. 24 is a perspective view illustrating an air conditioner employing a motor including an annular magnetic pole body, according to an embodiment of the disclosure.

FIG. 25 is a perspective view illustrating a vacuum cleaner employing a motor including an annular magnetic pole body, according to an embodiment of the disclosure.

FIG. 26 is a block diagram of a configuration of a washing machine employing a motor including an annular magnetic pole body according to an embodiment of the disclosure.

DETAILED DESCRIPTION

It should be understood that various embodiments of the disclosure in this document and terms used therein are not intended to limit the technical features described herein to particular embodiments of the disclosure and that the disclosure includes various modifications, equivalents, or substitutions of the embodiments of the disclosure.

With regard to the description of the drawings, like reference numerals may be used to represent like or related elements.

A singular form of a noun corresponding to an item may include one or a plurality of the items unless the context clearly indicates otherwise.

As used herein, each of the phrases such as "A or B," "at least one of A and B, "at least one of A or B," "A, B, or C," "at least one of A, B, and C," and "at least one of A, B, or C" may include any one of the items listed together in a corresponding one of the phrases, or all possible combinations thereof.

The term "and/or" includes any combination of a plurality of associated elements listed, or any one of the plurality of associated listed elements.

Terms such as "first," "second," etc. may be used simply to distinguish an element from other elements and do not limit the elements in any other respect (e.g., importance or order).

It will be understood that when an element (e.g., a first element) is referred to, with or without the term "functionally" or "communicatively", as being "coupled" or "connected" to another element (e.g., a second element), the element may be coupled to the other element directly (e.g., by wire), wirelessly, or via a third element.

The terms such as "comprise," "include," or "have" are intended to specify the presence of stated features, numbers, steps, operations, elements, components, or combinations thereof, but do not preclude the presence or addition of one or more other features, numbers, steps, operations, elements, components, or combinations thereof.

It will also be understood that when an element is referred to as "connected," "coupled," "supported," or "in contact" with another element, this includes not only when the elements are directly connected, coupled, supported, or in contact, but also when they are indirectly connected, coupled, supported, or in contact via a third element.

It will also be understood that when an element is referred to as being "on" another element, the element may be directly on the other element, or intervening elements may also be present therebetween.

An embodiment of the disclosure will now be described more fully hereinafter with reference to the accompanying drawings so that the embodiment of the disclosure may be easily implemented by one of ordinary skill in the art. However, an embodiment of the disclosure may be implemented in different forms and should not be construed as being limited to the embodiment of the disclosure set forth herein. In addition, parts not related to descriptions of the disclosure are omitted to clearly explain an embodiment of the disclosure in the drawings, and like reference numerals denote like elements throughout.

According to an embodiment of the disclosure, a home appliance including a motor is provided. Home appliances may include electrical apparatuses and machines used at home. According to an embodiment of the disclosure, a home appliance may include a device that is fixedly placed within a home or a device that is movable within the home. As used herein, a 'home' may refer to not only a house but also an indoor space such as an office. For example, the home appliance may include a television, a digital video disk (DVD) player, audio equipment, a refrigerator, an air conditioner, a vacuum cleaner, an oven, a microwave, a washing machine, an air purifier, a set-top box, a home automation control panel, a security control panel, a media box (e.g., Samsung Home-Sync™), a game console, an electronic dictionary, a camcorder, an electronic picture frame, a speaker, an e-book reader, a desktop PC, a laptop PC, a netbook computer, a workstation, a server, a personal digital assistant (PDA), a portable multimedia player (PMP), an MP3 player, a medical device, a camera, etc. According to an embodiment of the disclosure, the home appliance may include, in particular, a home appliance that drives a motor.

According to an embodiment of the disclosure, a home appliance may include at least one of a washing machine, an air conditioner, a vacuum cleaner, or a refrigerator that includes a motor.

Hereinafter, the disclosure is described in detail. However, the following description is essentially only an example.

The disclosure relates to a surface permanent magnet synchronous motor (also hereinafter simply referred to as a motor).

The motor includes a rotor that rotates about a rotation axis, and a stator that faces the rotor with an air gap therebetween.

The stator has a stator core having a plurality of teeth extending in a diameter direction, and a plurality of coils formed by inserting electric wires into slots formed between adjacent teeth. The rotor has an annular magnetic pole body, which is formed by arranging a plurality of magnets with an arc-shaped cross-section in a circumferential direction, on a side opposite to the stator. Furthermore, each of the plurality of magnets has two or more magnetic poles arranged in the circumferential direction, and the annular magnetic pole body is composed of a combination of two or more types of the magnets with different numbers of magnetic poles.

Because the motor according to an embodiment of the disclosure uses multipolar magnets, the number of magnets may be reduced, thereby reducing the cost of components. In addition, by combining two or more types of the magnets with different numbers of magnetic poles to produce an annular magnetic pole body, the force acting on each magnetic pole, which constitutes a harmonic component of cogging torque, may be distributed.

A magnetic flux is likely to decrease at a magnetic pole located at an end of each magnet upon magnetization. Accordingly, harmonic components of the cogging torque may be cancelled out by arranging these magnetic poles so that the harmonic components are out of phase with each other. As a result, even when magnetization imbalance occurs, an increase in the harmonic components of the cogging torque may be suppressed.

When the number of magnetic poles of the rotor is p and the number of slots in the stator is n, the magnets consist of a magnet having a number A of magnetic poles equal to p/|p-n| (where p/|p-n| is a natural number), and a magnet having a number A±1 of magnetic poles. When the annular magnetic pole body is manufactured with a configuration of these different types of magnets, harmonic components of the cogging torque may be effectively suppressed with a relatively small number of magnets.

When the number of magnetic poles of the rotor is p and the number of slots in the stator is n, there are pole-slot combinations where a value of a magnetic pole pitch (β) expressed as p/|p-n| is 2N (N is a natural number) or 4N. In this case, an n-th or 2n-th order harmonic component of the cogging torque may be suppressed more effectively.

In such a case, when a magnetic pole located at an end of the same side of each magnet among magnetic poles of each magnet is a specific magnetic pole, the magnetic poles of the annular magnetic body are periodically classified into groups having numbers ranging from 1 to the value of the magnetic pole pitch (β). Also, when differences between numbers of specific magnetic poles respectively included in each combination of two groups, whose group numbers have a difference equal to the natural number N, are summed together, and the sum is less than or equal to half a total number of magnets constituting the annular magnetic pole body, problems related to harmonic components do not occur.

By using the above-described method, even when magnetization imbalance occurs in the annular magnetic pole body, harmonic components of the cogging torque may be suppressed, and even when some harmonic components of the cogging torque remain, noise that is practically problematic may be prevented.

According to an embodiment of the disclosure, the rotor may be located on an outside of the stator so that a surface of the rotor facing the stator constitutes an inner circumferential surface of the rotor.

Therefore, when the motor is of an outer rotor type, an area occupied by magnets may be increased, and thus, high torque may be achieved. Furthermore, even when a centrifugal force acts on each magnet, the magnet may be prevented from popping out of the rotor. Therefore, the outer rotor type motor is advantageous for high-speed rotation.

The motor according to an embodiment of the disclosure may be a motor installed in a washing machine to rotationally drive a washing tub of the washing machine. Because the motor used in the washing machine has a wide rotation area, a relatively large diameter, and a large number of magnetic poles or slots, the motor according to the disclosure is effective for use in the washing machine.

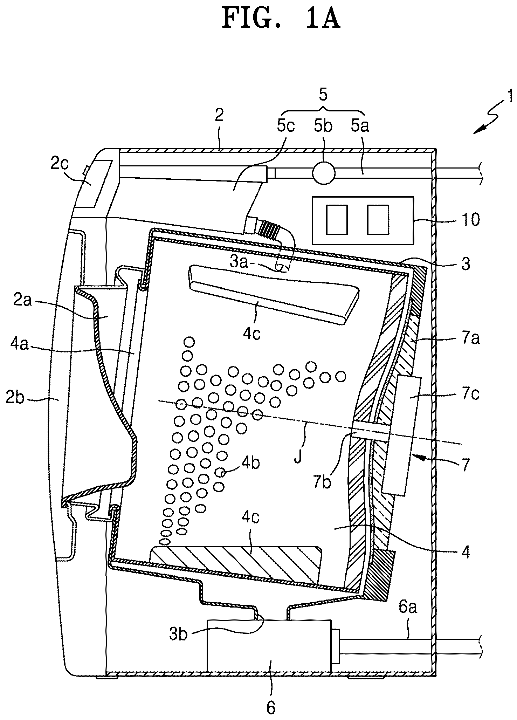

FIG. 1A is a diagram illustrating a configuration of a washing machine according to an embodiment of the disclosure.

A home appliance according to an embodiment of the disclosure may be a washing machine 1. For example, the washing machine 1 may be configured to automatically execute a washing process consisting of washing, rinsing, spinning, and drying cycles. According to an embodiment of the disclosure, the washing machine 1 may be a front loader washing machine (e.g., a drum-type washing machine) with a laundry inlet located on the front or a top loader washing machine (e.g., Tongdori washing machine) with a laundry inlet located on the top, and the washing machine 1 may include a dryer.

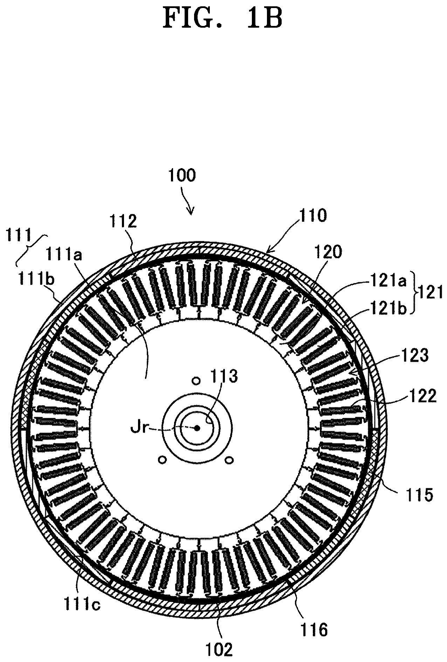

As illustrated in FIG. 1, the washing machine 1 may include a casing 2, a stationary tub 3, a rotary tub (or a drum) 4, a water supply device 5, a drain pump 6, a driving unit 7, and a controller 10.

The casing 2 is a box-shaped container composed of panels or a frame, and forms an outer portion of the washing machine 1. A laundry inlet 2a for loading laundry is located on a front of the casing 2, and a door 2b having a transparent window is attached to the laundry inlet 2a so that the laundry inlet 2a may be opened and closed by the door 2b. A manipulation part 2c may be provided above the laundry inlet 2a so that the user may manipulate the washing machine 1.

The stationary tub 3 includes a cylindrical container capable of storing water, and is installed inside the casing 2 with one opening connected to the laundry inlet 2a. The stationary tub 3 is supported by a damper (not shown) provided inside the casing 2 to be stabilized with a center axis J (rotation axis) inclined as indicated by a dotted line in FIG. 1A.

The rotary tub 4 includes a cylindrical container having a diameter smaller than that of the stationary tub 3, and is accommodated in the stationary tub 3 so that a central axis thereof is aligned with the central axis of the stationary tub 3. According to the embodiment of the disclosure shown in FIG. 1A, the rotary tub 4 may be arranged to rotate with its central axis inclined upward from horizontal toward the front of the washing machine 1. A circular opening 4a facing the laundry inlet 2a is formed in a front portion of the rotary tub 4. Laundry is loaded into the rotary tub 4 via the laundry inlet 2a and the circular opening 4a.

The rotary tub 4 is provided with a number of spinning holes 4b over the entire side surface thereof (only a part of the entire side surface is shown in FIG. 1) thereof, and lifters 4c for stirring are provided on an inner area of the side surface. The front portion of the drum 4 is rotatably supported on the laundry inlet 2a.

The water supply device 5 is provided above the stationary tub 3 and may include a water supply pipe 5a, a water supply valve 5b, and a detergent container 5c. An upstream end of the water supply pipe 5a is connected to an external water supply source (not shown), and a downstream end of the water supply pipe 5a is connected to a water supply port 3a of the stationary tub 3. The water supply valve 5b and the detergent container 5c may be sequentially installed in the middle of the water supply pipe 5a from an upstream side of the water supply pipe 5a. The detergent container 5c may hold a detergent, a fabric softener, etc. and introduce them into the stationary tub 3 together with water.

The drain pump 6 is provided below the stationary tub 3 and may be connected to the stationary tub 3 via a drain port 3b. The drain pump 6 serves to drain unnecessary water from the stationary tub 3 to outside of the washing machine 1 via a drain pipe 6a.

The driving unit 7 is attached to a bottom of the stationary tub 3, and may include a unit base 7a, a shaft 7b, and a motor 7c.

The unit base 7a is located at the bottom of the stationary tub 3 and may include a disk-shaped metal or resin member according to an embodiment of the disclosure. The unit base 7a may be provided at the center thereof with a shaft insertion hole formed in a cylindrical shape and extending along the center axis J, and a pair of ball bearings (not shown) are mounted at both ends of the shaft insertion hole.

The shaft 7b is rotatably supported on the unit base 7a. **In** the embodiment of the disclosure shown in FIG. 1A, the shaft 7b is supported by the pair of ball bearings mounted in the shaft insertion hole of the unit base 7a. Accordingly, the shaft 7b is provided to be rotatable about the rotation axis J. The shaft 7b may pass through bottom of the stationary tub 3 to protrude into the stationary tub 3, and an end of the shaft 7b is fixed at a center of the bottom of the rotary tub 4. That is, the bottom of the rotary tub 4 is supported about the rotation axis J by the shaft 7b. The driving unit 7 directly drives the rotary tub 4 so that the rotary tub 4 rotates about the center axis J based on driving of the motor 7c.

According to an embodiment of the disclosure, the center axis J is aligned with a center line of the stationary tub 2, a center line of the rotary tub 4, and an axial line of the shaft 7b. Furthermore, the rotation axis J is arranged to be inclined with respect to a horizontal direction or in the horizontal direction.

The motor 7c rotationally drives the rotary tub 4. According to an embodiment of the disclosure, the motor 7c rotates the shaft 7b fixed to the rotary tub 4, and the rotary tub 4 rotates due to the rotation of the shaft 7b. Furthermore, the number of revolutions per unit time of the motor 7c may be variable.

The controller 10 of the washing machine 1 may be located inside the washing machine 1, and comprehensively controls operations of the washing machine 1. For example, the controller 10 may be in the form of a processor or the like mounted on a printed circuit board (PCB). The controller 10 may include hardware, such as a processor (or a microprocessor controller (MICOM)) or a memory, and software, such as a control program, etc. The controller 10 may include an algorithm for controlling operations of components in the washing machine 1, at least one memory storing data in the form of a program, and at least one processor performing the above-described operations by using the data stored in the memory. The memory and the processor may be implemented as separate chips. The processor may include one or two or more processor chips or include one or two or more processing cores. The memory may include one or two or more memory chips or include one or two or more memory blocks. In addition, the memory and the processor may be implemented as a single chip.

According to the disclosure, there is provided a surface permanent magnet synchronous motor that allows for easy adjustment of cogging torque. Cogging torque is a rotational force generated by a phase difference in magnetic poles of magnets included in a rotor of a motor and due to a magnetic attractive force between the rotor and a stator of the motor. In a rotor of a surface permanent magnet synchronous motor, there are an equal number of north (N)-pole magnets and south (S)-pole magnets with the same surface magnetic flux distribution and magnetic flux amount. The N-pole magnets may be classified into two groups with different surface magnetic flux distributions and magnetic flux amounts.

In a surface permanent magnet synchronous motor, permanent magnets with an arc-shaped cross-section are sometimes arranged all around a surface of a rotor.

In addition, a permanent magnet is created by magnetizing a magnetic material, and the greater the number of magnetic materials, the higher the costs of elements. Therefore, in order to suppress the cost of elements, the number of magnetic materials may be reduced by allowing one magnetic material to be magnetized with a plurality of magnetic poles.

However, in this case, there is a gap between adjacent magnetic materials, and thus, the gap acts as a pitch of the plurality of magnetic poles. Due to the effect of the gap, in mass production of a surface permanent magnet synchronous motor, the phase may deviate from an ideal state during magnetization, resulting in magnetization imbalance. Even when the gap is within a tolerance range for mass production, noise may occur because harmonic components of the cogging torque increase due to the magnetization imbalance. Therefore, the disclosure provides a method that enables suppression of the increase in harmonic components of the cogging torque even when magnetization imbalance occurs.

In exemplary embodiments, the increase in harmonic components of the cogging torque may be suppressed even when magnetization imbalance occurs. As a result, noise occurring in the surface permanent magnet synchronous motor may also be prevented.

FIG. 1B is a schematic cross-sectional view illustrating a configuration of a surface permanent magnet synchronous motor 100 according to the related art (hereinafter simply referred to as a conventional motor 100).

The conventional motor 100 is used in household fully automatic washing machines, such as drum-type washing machines and top-loading washing machines, to rotate the washing machine.

The drive shaft of the conventional motor 100 may be directly connected to the washing machine without going through a transmission or the like (direct drive). Thus, the conventional motor 100 is rotationally driven over a wide range from high torque low rotation during washing to low torque high rotation during spinning.

The conventional motor 100 includes a rotor 110 and a stator 120.

The stator 120 consists of a stator core 121, a plurality of coils 122, etc. The stator core 121 includes a core base 121a with an annular cross-section and a plurality of teeth 121b arranged radially on the core base 121a. In one example conventional motor 100, the number of the teeth 121b is 36. The teeth 121b are arranged equidistantly on an outer circumferential surface of the core base 121a and extend radially outward in the diameter direction. **In** addition, although not shown, the stator core 121 is coated with an insulator.

Thirty-six (36) spaces (slots 123) are formed between adjacent teeth 121b. The plurality of coils 122 are formed by inserting electric wires into the slots 123 and respectively winding the electric wires around the teeth 121b (concentrated windings). There is also distributed winding where an electric wire is wound around at least two teeth 121b. The plurality of coils 122 include coil groups of three phases, i.e., a U phase, a V phase, and a W phase.

The rotor 110 is located outside the stator 120 (outer rotor type) and faces the stator 120 with a small air gap 102 therebetween.

The rotor 110 includes a motor case 111 made of metal and including a bottom wall 111a having a disk shape and a peripheral wall 111b having a cylindrical shape and connected from a circumference of the bottom wall 111a, and an annular magnetic pole body 112. A shaft hole 113 is formed in a center of the motor case 111. A shaft (not shown) is inserted into the shaft hole 113. As a result, the motor case 111 is rotatable about a rotation axis (Jr).

A plurality of magnets 115 having an arc-shaped cross-section are attached to an inner surface (an opposite surface 111c) of the peripheral wall 111b that inwardly and outwardly faces the stator 120. Because the opposite surface 111c is configured as an inner circumferential surface of the rotor 110, there is no risk that the magnets 115 will pop out even when a centrifugal force acts on the magnets 115. Therefore, motors configured as above are suitable for high-speed rotation.

In the case of the conventional motor 100, the number of magnets 115 can be 12. For example, the magnets 115 may include a ferrite magnet. The annular magnetic pole body 112 is formed by arranging the magnets 115 in a circumferential direction. In addition, as described later, an inter-magnet gap 116 (about 1 mm) between two adjacent magnets 115 may be present.

This annular magnetic pole body 112 faces the stator 120. Alternating current periodically flows through coil groups of each phase in the stator 120. In this way, a magnetic field between the stator 120 and the rotor 110 changes, causing the rotor 110 to rotate.

In order to reduce element costs, the conventional motor 100 may be configured so that one of the magnets 115 has two or more poles (Mp).

In detail, each of the magnets 115 has four magnetic poles (Mp) consisting of two N poles and two S poles arranged alternately in the circumferential direction. Accordingly, the rotor 110 has 48 magnetic poles (Mp). Therefore, a pole-slot combination of the conventional motor 100 is a 48-pole 36-slot (48p36n).

Throughout the disclosure, the annular magnetic pole body 112 of the related art may be referred to as a 'conventional annular magnetic pole body 112', and an improved annular magnetic pole body 2 according to an embodiment of the disclosure may be referred to simply as an 'annular magnetic pole body 2'.

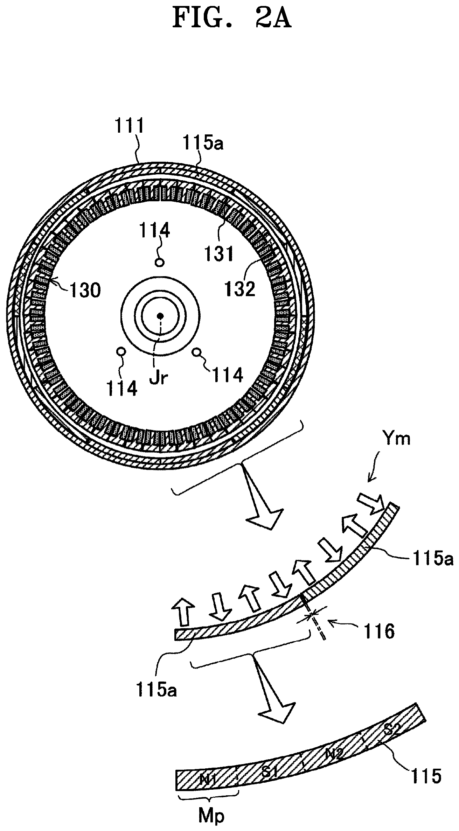

FIG. 2A is a diagram illustrating a method of magnetizing an annular magnetic pole body.

Referring to FIG. 2A, a method of magnetizing the annular magnetic pole body 112 is illustrated. In the case of the conventional motor 100, 12 magnets 115 are formed simultaneously by attaching unmagnetized magnetic materials 115a to the motor case 111 and simultaneously magnetizing the magnetic materials 115a with 48 magnetic poles (Mp).

For magnetization, a predetermined magnetizing yoke 130 corresponding to the conventional motor 100 is used. A magnetizing yoke 130 may include coils 131, teeth 132, etc. like the stator 120. For the magnetizing yoke 130, there are 48 coils 131 and 48 teeth 132 corresponding to the 48 poles.

The magnetizing yoke 130 needs to be set at a predetermined position in the circumferential direction relative to the annular magnetic pole body 112. Accordingly, a positioning hole 114 may be formed in the bottom wall 111a. The magnetizing yoke 130 is aligned with the motor case 111 based on the positioning hole 114. In this way, the current flows in the coils 131 of the magnetizing yoke 130.

In this way, as enlarged and shown in FIG. 2A, a strong magnetic force acts on each of the magnetic materials 115a for a predetermined time, as indicated by an arrow Ym. As a result, the magnetic materials 115a are each irreversibly magnetized to form the magnets 115. In the case of the conventional motor 100, as enlarged to show detail in FIG. 2A, four magnetic poles (Mp) are formed on each of the magnets 115.

When the annular magnetic pole body 112 is properly magnetized, cogging torque may be suppressed, and thus, the conventional motor 100 may be designed so that problematic noise does not occur.

However, as described above, a small gap (the inter-magnet gap 116) may be present between the two adjacent magnets 115. Therefore, when attaching the magnetic materials 115a to the peripheral wall 111b, a positional misalignment may occur in arrangement of the magnets 115. In addition, even when the magnetizing yoke 130 is set on the motor case 111, a positional misalignment may occur in the arrangement of the magnetizing yoke 130 and the annular magnetic pole body 112 due to the precision of the positioning hole 114.

When such a positional misalignment occurs during magnetization, a surface magnetic flux density may differ between the magnetic poles (Mp) of one or more magnets 115 due to the inter-magnet gap 116.

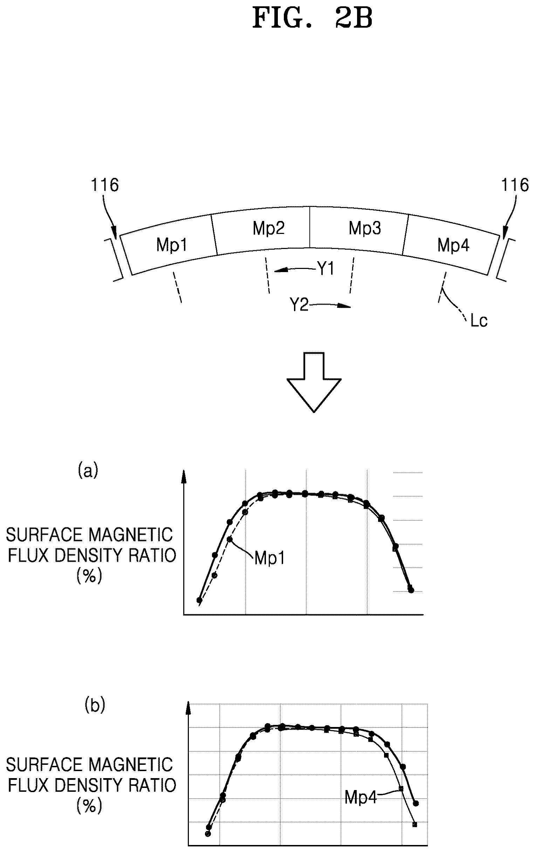

FIG. 2B is a diagram illustrating a position relationship of a magnet during magnetization in an annular magnetic pole body.

FIG. 2B illustrates a positional relationship of a magnet upon magnetization according to FIG. 2A. A dashed line Lc indicates a proper center position of a magnetic flux in the magnetizing yoke 130. A positional misalignment can occur in the arrangement of the magnetizing yoke 130 and the annular magnetic pole body 112, so that center positions of magnetic flux at the magnetic poles (Mp) move toward a first end side (next to the magnetic pole Mp1) in the circumferential direction, as indicated by an arrow Y1. Accordingly, because a central position at which the magnetic material 115a is magnetized with each magnetic pole (Mp) is also misaligned in the circumferential direction, a portion of the magnetic flux is directed into the inter-magnet gap 116, resulting in a decrease in the surface magnetic flux density at the magnetic pole Mp1, as shown in graph (a) of FIG. 2B.

On the other hand, as indicated by an arrow Y2, a positional misalignment can occur in the arrangement of the magnetization yoke 130 and the annular magnetic pole body 112, such that central positions of magnetic flux at the magnetic poles (Mp) move toward a second end side (next to the magnetic pole Mp4) in the circumferential direction. Accordingly, a central position at which the magnetic material 115a is magnetized with each magnetic pole (Mp) is also misaligned in the circumferential direction, and thus, the surface magnetic flux density at the magnetic pole Mp4 decreases, as shown in graph (b) of FIG. 2B.

As this magnetization imbalance occurs, the magnitude of the cogging torque changes.

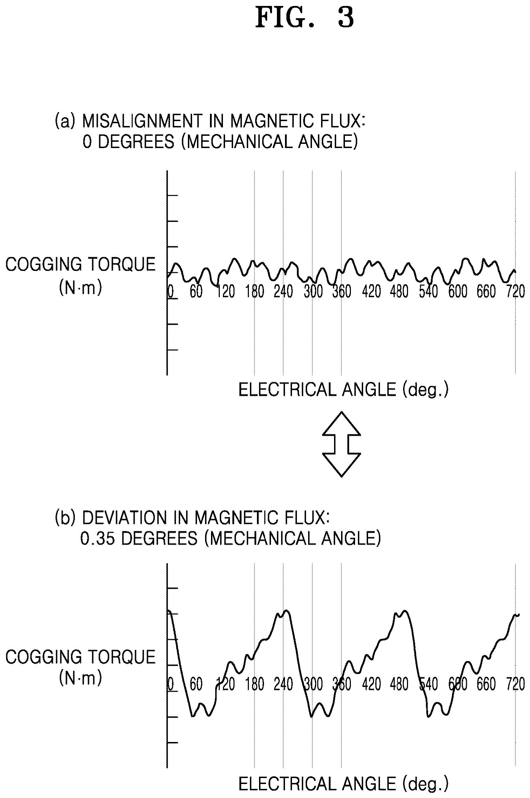

Graphs (a) and (b) of FIG. 3 illustrate a change in cogging torque due to misalignment of an annular magnetic pole body, according to an embodiment of the disclosure.

A scale of the cogging torque shown on the vertical axis of graphs (a) and (b) of FIG. 3 is the same. Graph (a) of FIG. 3 illustrates an ideal state where there is no magnetization imbalance. Graph (b) of FIG. 3 illustrates an unbalanced state where there is a magnetization imbalance of 0.35 degrees (mechanical angle). The other conditions are the same. Therefore, the unbalanced state is a state in which a position of magnetization is shifted from the ideal state by 0.35 degrees in the circumferential direction.

When there is no magnetization imbalance, cogging torque is small and does not fluctuate significantly. On the other hand, when there is a magnetization imbalance, the cogging torque has periodic fluctuations that are different from those when there is no magnetization imbalance, and the magnitude of the cogging torque changes.

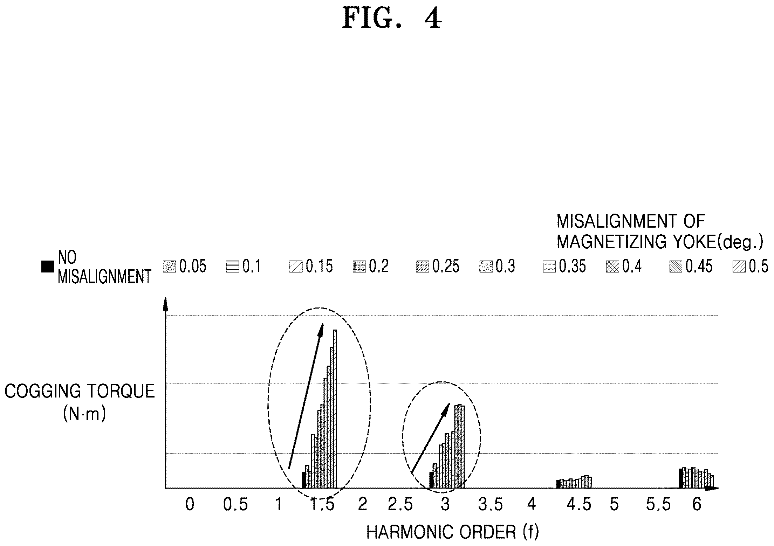

FIG. 4 is a graph illustrating a relationship between the degree of magnetization imbalance and harmonic components of cogging torque, according to an embodiment of the disclosure.

FIG. 4 illustrates a result of aggregating the above-described analysis results. Harmonic components of cogging torque corresponding to 1.5th order (1.5f), 3rd order (3f), 4.5th order (4.5f), and 6th order (6f) are shown. At the 4.5th order (4.5f) and the 6th order (6f), a magnitude of the cogging torque is relatively small and sensitivity to misalignment is small.

On the other hand, at the 1.5th order (1.5f) and the 3rd order (3f), the magnitude of the cogging torque is very small when there is no magnetization imbalance, but because the sensitivity to misalignment is very large, the magnitude of the cogging torque also increases significantly as the degree of magnetization imbalance increases. Therefore, when fixing the magnetizing yoke 130 to the positioning hole 114 for magnetization, a large cogging torque may occur with even a slight angular misalignment caused due to a clearance for ensuring manufacturability.

In addition, the harmonic order herein is expressed in an electrical angle (f). An order expressed based on a mechanical angle is an order expressed based on an electrical angle, which is multiplied by the pair number of the magnetic poles. For example, when the number of magnetic poles is 48, the pair number of the magnetic poles is 24, so 1.5f is a 36th order (36x) in the mechanical angle. In the disclosure, the order expressed by an electrical angle is denoted by f, and the order expressed by a mechanical angle is denoted without a symbol.

As the harmonic components of the cogging torque increase, the sound and vibration increase accordingly. When the magnitude of the harmonic components of the cogging torque exceeds an allowable range, these are perceived as a strange sound, and the resultant noise becomes a problem. Therefore, when the above-described magnetization imbalance occurs, the harmonic components of the cogging torque increase, resulting in noise. In the related art, additional components such as vibration damping materials were sometimes required to mitigate the noise produced.

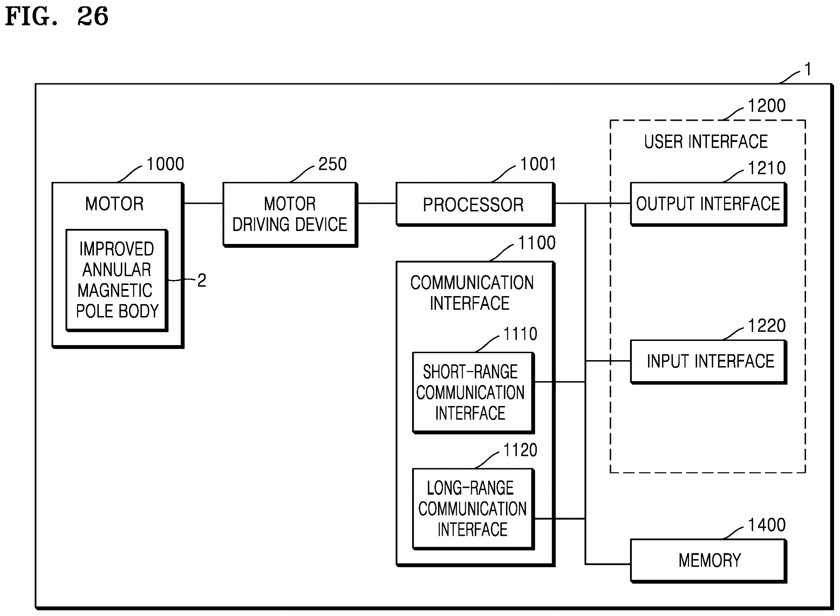

Hereinafter, a motor (a motor 1000 of FIG. 26) having lower cogging torque according to an embodiment of the disclosure is described in detail.

In addition, the basic components of the motor 1000, including the stator 120, are the same as those of the conventional motor 100 described above. Accordingly, the motor 1000 according to an embodiment of the disclosure is described in detail with respect to components different from those of the conventional motor 100, and the same components are represented using the same reference numerals or symbols as in the conventional motor 100, and descriptions thereof are simplified or omitted below.

The disclosure may be applied to motors with different slot/plot combinations as described later, but the motor 1000 with the same slot/plot combination as the conventional motor 100 is first described.

In the motor 1000 according to an embodiment of the disclosure, the configuration of the annular magnetic pole body 112 of the rotor 110 is as follows. In detail, each of the magnets 115 has two or more magnetic poles (Mp), and the annular magnetic pole body 2 (also hereinafter referred to as the improved annular magnetic pole body 2) is composed of a combination of two or more types of magnets 115 with different numbers of magnetic poles..

The motor 1000 is the same as the conventional motor 100 in that each of the magnets 115 of the motor 1000 has two or more magnetic poles (Mp) (multi-polarization). As a result, the cost of elements may be reduced.

The motor 1000 according to the embodiment of the disclosure is different from the conventional motor 100 in that the annular magnetic pole body 112 includes a combination of two or more types of magnets 115 with different numbers of magnetic poles (hybridization).

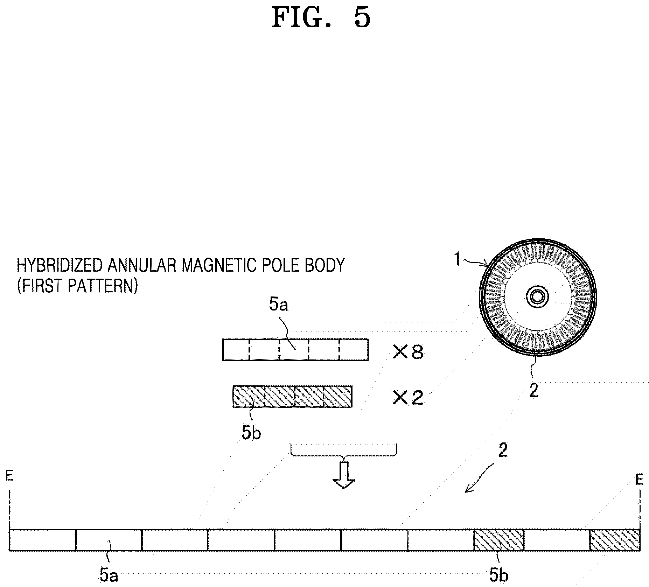

FIG. 5 is an unfolded view illustrating an example of an annular magnetic pole body 2 in a motor, according to an embodiment of the disclosure.

FIG. 5 illustrates an example (i.e., a first pattern) of the improved annular magnetic pole body 2 according to an embodiment of the disclosure.

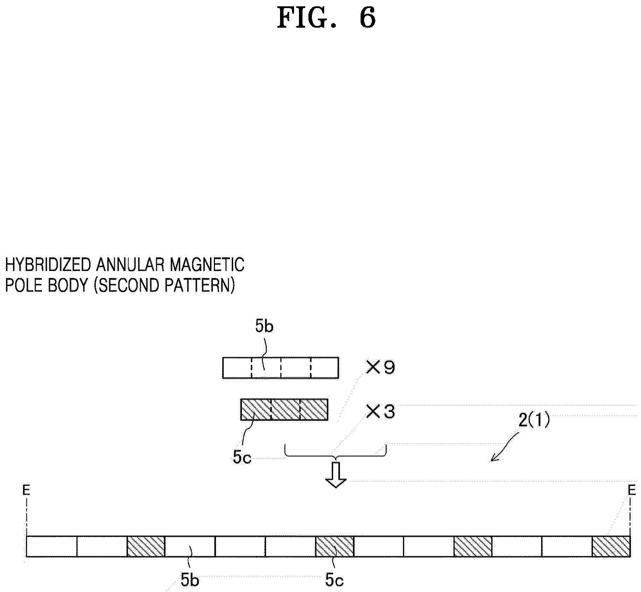

FIG. 6 illustrates another example (i.e., a second pattern) of the improved annular magnetic pole body 2 according to an embodiment of the disclosure.

FIGS. 5 and 6 are unfolded views in which the improved annular magnetic pole body 2 is cut open at a predetermined cut portion E and unfolded linearly.

The first pattern consists of 8 magnets 115 with 5 magnetic poles (Mp) (5-pole magnets 5a) and 2 magnets 115 with 4 magnetic poles (Mp) (4-pole magnets 5b). While the annular magnetic pole body 112 of the conventional motor 100 is composed of 12 magnets 115, the first pattern of the improved annular magnetic pole body 2 is composed of 10 magnets 115.

Here, in the first pattern of the improved annular magnetic pole body 2, the 10 magnets 115 are arranged in the circumferential direction in the order of the 5-pole magnet 5a, 5-pole magnet 5a, 5-pole magnet 5a, 5-pole magnet 5a, 5-pole magnet 5a, 5-pole magnet 5a, 5-pole magnet 5a, 4-pole magnet 5b, 5-pole magnet 5a, and 4-pole magnet 5b. In addition, as described below, the arrangement of the magnets 115 in the first pattern is not limited thereto. In other words, the relative positions of the eight 5-pole magnets 5a and the two 4-pole magnets 5b may be varied. For example, the 10 magnets 115 may be arranged in the order of the 5-pole magnet 5a, 5-pole magnet 5a, 4-pole magnet 5b, 5-pole magnet 5a, 5-pole magnet 5a, 5-pole magnet 5a, 5-pole magnet 5a, 4-pole magnet 5b, 5-pole magnet 5a, and 5-pole magnet 5b.

The second pattern of the improved annular magnetic pole body 2(1) consists of 9 magnets 115 with 4 magnetic poles (Mp) (4-pole magnets 5b) and 4 magnets 115 with 3 magnetic poles (Mp) (3-pole magnets 5c). Unlike in the conventional motor 100, the second pattern is composed of 13 magnets 115.

In the second pattern of the improved annular magnetic pole body 2(1) shown in FIG. 6, the magnets 115 are arranged in the circumferential direction in the order of the 4-pole magnet 5b, 4-pole magnet 5b, 3-pole magnet 5c, 4-pole magnet 5b, 4-pole magnet 5b, 4-pole magnet 5b, 3-pole magnet 5c, 4-pole magnet 5b, 4-pole magnet 5b, 3-pole magnet 5c, 4-pole magnet 5b, 4-pole magnet 5b, and 3-pole magnet 5c. In addition, as described below, the arrangement of the magnets 115 in the second pattern is not limited thereto. In other words, the relative positions of the nine 5-pole magnets 5a and the four 4-pole magnets 5b may be varied.

When p is the number of magnetic poles of the rotor 110 and n is the number of slots in the stator 120, the first pattern and the second pattern each consist of a first magnet having a number A of magnetic poles (Mp) equal to p/|p-n| (where p/|p-n| is a natural number) and a magnet(s) having a number $A\pm1$ of magnetic poles (Mp). To distinguish the magnet from the first magnet, a magnet with a number A+1 of magnetic poles (Mp) may be referred to as a second magnet, and a magnet with a number A-1 of magnetic poles (Mp) may be referred to as a third magnet.

In detail, the magnets 115 in the first pattern include a first magnet, i.e., a 4-pole magnet 5b, having a number A of magnetic pole (Mp) equal to 48/|48-36| (A=4), and a second magnet, i.e., a 5-pole magnet 5a, having a number A+1 of magnetic poles (Mp). Similarly, the magnets 115 in the second pattern include the first magnet, i.e., the 4-pole magnet 5b, having a number A of magnetic poles (Mp) equal to 48/|48-36| (A=4), and a third magnet, i.e., a 3-pole magnets 5c, having a number A-1 of magnetic poles (Mp).

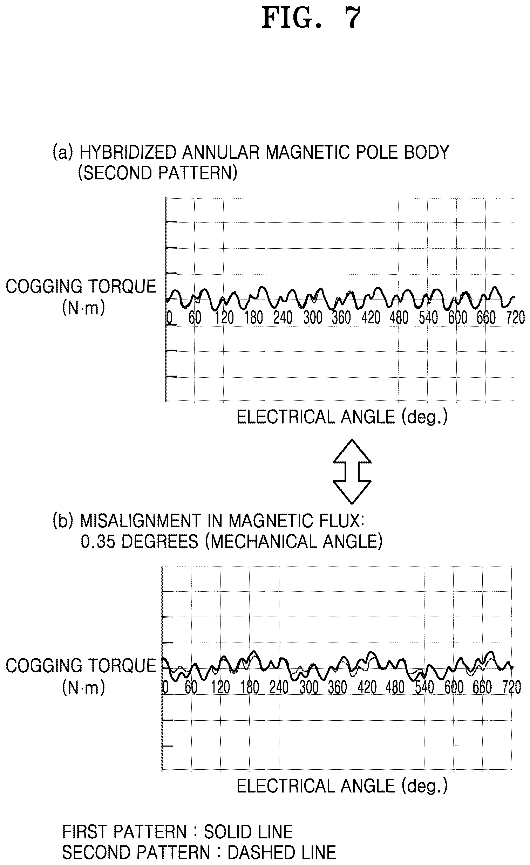

FIG. 7 is a diagram illustrating cogging torque when using an improved annular magnetic pole body, according to an embodiment of the disclosure.

FIG. 7 illustrates an example of results of analyzing cogging torque for the motor 1000. FIG. 7 corresponds to FIG. 3. Unlike in the conventional motor 100, in the motor 1000 according to an embodiment of the disclosure, the cogging torque is small and does not fluctuate significantly when there is magnetizing imbalance, as well as when there is no magnetizing imbalance.

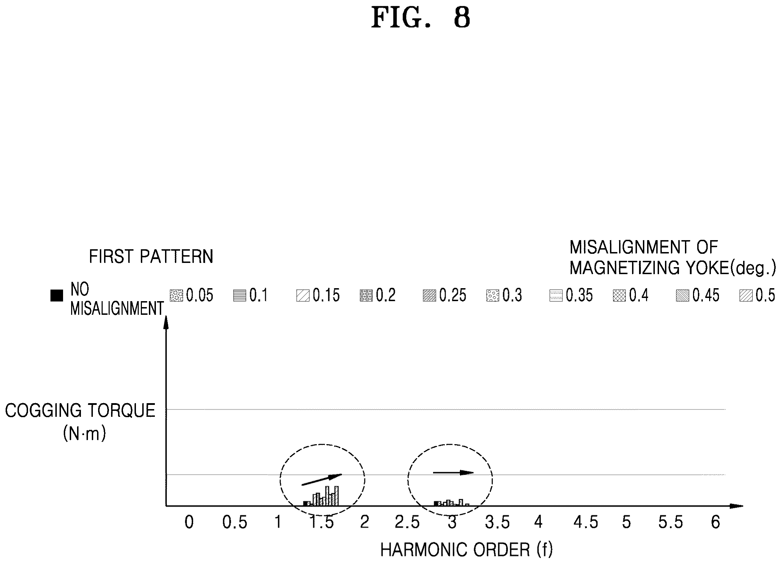

FIG. 8 is a graph illustrating cogging torque according to a first pattern, according to an embodiment of the disclosure.

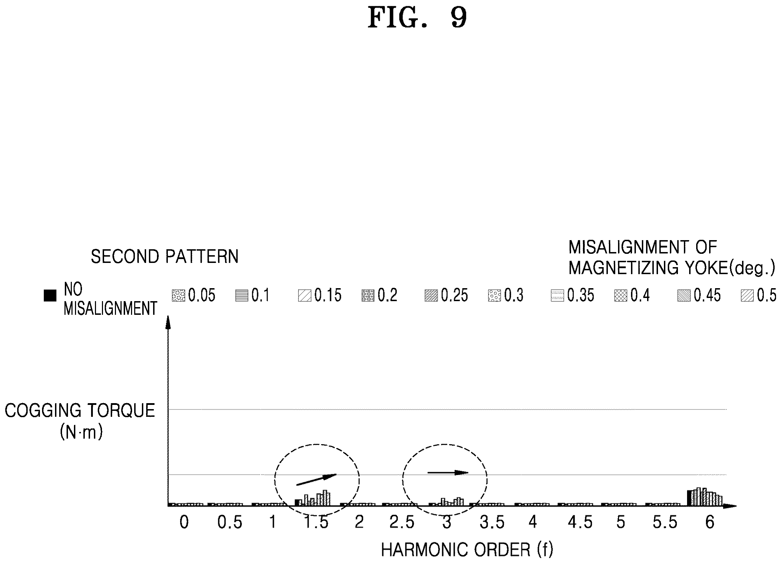

FIG. 9 is a graph illustrating cogging torque according to a second pattern, according to an embodiment of the disclosure.

FIG. 8 shows a relationship between the degree of magnetization imbalance in the first pattern and harmonic components of the cogging torque. Furthermore, FIG. 9 shows a relationship between the degree of magnetization imbalance in the second pattern and harmonic components of the cogging torque. Each of the graphs of FIGS. 8 and 9 corresponds to the graph of FIG. 4, and the scale of the cogging torque is the same.

According to these patterns, harmonic components of the cogging torque are found at the 1.5th order (1.5f), 3rd order (3f), and 6th order (6f). As seen on FIG. 4, at the 1.5th order (1.5f) and 3rd order (3f) where the cogging torque is large and the sensitivity to magnetization imbalance is also high in the conventional motor 100, the cogging torque becomes very small and the sensitivity to misalignment is also lower according to the first pattern and the second pattern on FIGS. 8 and 9.

Therefore, when the improved annular magnetic pole body 2 to which the first pattern or the second pattern is applied is used, an increase in the harmonic components of the cogging torque that occurs due to magnetization imbalance may be suppressed.

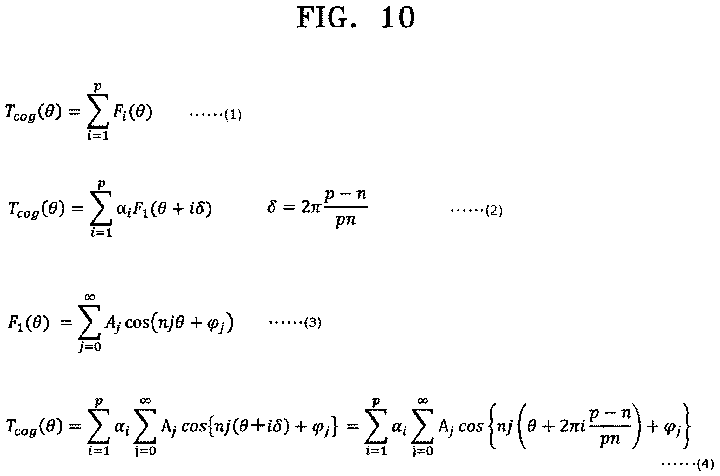

Next, the mechanism of cogging torque is described with reference to FIG. 10.

FIG. 10 is a mathematical equation related to cogging torque, according to an embodiment of the disclosure.

Cogging torque is obtained by 'summing forces acting on each of a total number of poles'. Accordingly, the cogging torque ($Tcog(\theta)$) of the rotor 110 with the number of magnetic poles being p may be expressed via Equation (1) where $\theta$ is an angle (a mechanical angle) of the rotor 110 with respect to the stator 120, and $Fi(\theta)$ is a force acting on one pole.

In the motor 1000, the magnetic poles (Mp) of the rotor 110 are equidistantly arranged in the circumferential direction, and the slots 123 in the stator 120 are also equidistantly arranged in the circumferential direction. As a result, cogging torques corresponding to adjacent magnetic poles (Mp) occur due to a phase difference (positional relationship in the circumferential direction) therebetween.

Therefore, with respect to a magnetic pole (Mp) at an arbitrary position as a reference magnetic pole, the cogging torque ($Tcog(\theta)$) of the rotor 110 may be expressed via Equation (2). In Equation (2), $\delta$ is a phase difference, N is the number of slots as described above, $F_1$ is the cogging torque of the reference magnetic pole

(Mp), and $\alpha_i$ is an amplitude ratio for $F_1$ caused by a difference in magnetic force acting on each magnetic pole (Mp).

When $F_1$ is represented as a Fourier series expansion, it may be expressed via Equation (3). Then, substituting Equation (3) into Equation (2), the cogging torque ($Tcog(\theta)$) of the rotor 110 may be expressed via Equation (4).

From Equation (2), it can be seen that the force acting on the one pole has a phase difference of $\delta$ from the adjacent magnetic pole. In other words, the force acting on the one pole is periodic with a magnetic pole pitch (hereinafter, pole pitch) being $\beta=2\pi/n|\delta|$, which is a slot pitch ($2\pi/n$) divided by the phase difference ($\delta$) from an adjacent magnetic pole.

Also, from Equation (4), it can be seen that an n-th harmonic component (j=1) of the force acting on the one pole has an out of phase relationship at a pitch of $\beta/2$. Similarly, a 2n-th harmonic component (j=2), of the force acting on one pole has an out of phase relationship at a pitch of $\beta/4$ (the pitches of $\beta/2$ and $\beta/4$ are also referred to as out-of-phase pitches). Cogging torque may be considered as the remaining force that is not canceled out when forces acting on each of a total number of poles.

That is, for the n-th harmonic component of the cogging torque, there is a cogging torque component that is cancelled out with an out-of-phase pitch of $\beta/2$. Similarly, for the 2n-th harmonic component of the cogging torque, there is a cogging torque component that is cancelled out with an out-of-phase pitch of $\beta/4$.

The magnetization imbalance of the magnet 115 occurs when a pole (Mp) has a small magnetic flux at a pole pitch ($\beta$), i.e., at one end of each of the magnets 115. Thus, for magnetic poles (Mp) having a small magnetic flux located at the ends of the respective magnets 115, when a pole-slot combination in which harmonic components of the cogging torque are out of phase is selected, the harmonic components of the cogging torque that occur may be canceled out, and thus, and an increase in the harmonic components of the cogging torque may be effectively suppressed.

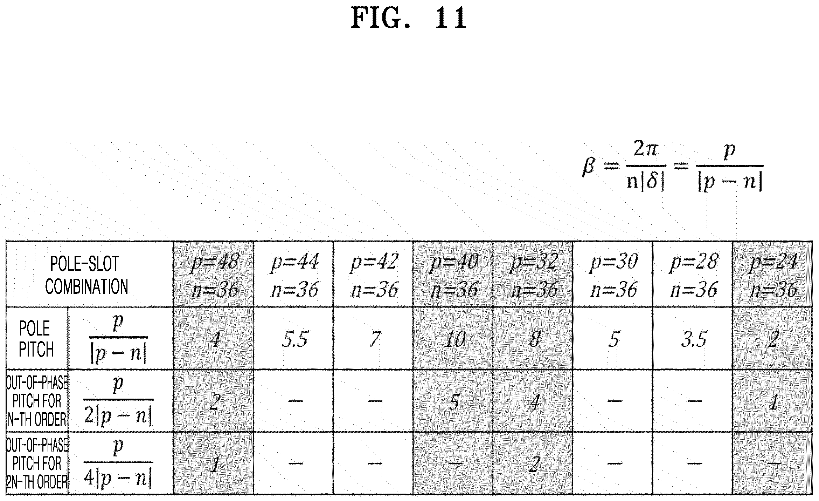

FIG. 11 is a table summarizing a pole pitch and an out-of-phase pitch according to pole-slot combinations.

Referring to FIG. 11, a table summarizing the pole pitch ($\beta$) and out-of-phase pitches for main pole-slot combinations is shown. A pole pitch ($\beta$) may be expressed as p/|p-n| (where |p-n| is the absolute value of p-n) by introducing a phase difference ($\delta$) in Equation (2), as shown in the upper right of the table.

At the top of the table, a pole-slot combination is shown. Below the plot-slot combinations, the pole pitch ($\beta$) corresponding to one period is shown. Furthermore, below the pole pitch ($\beta$), out-of-phase pitches at an n-th (a mechanical angle, the same below) harmonic component and a 2n-th harmonic component are shown.

For example, in the pole-slot combination of 48p36n, because the pole pitch ($\beta$) is 4, the force acting on one pole has a periodicity of being in phase, for example, at a first magnetic pole (Mp) and a fifth magnetic pole (Mp) in either circumferential direction. Furthermore, in the same combination, because a 36-th harmonic component of the cogging torque has an out-of-phase pitch of 2, the force acting on one pole has a periodicity of being out of phase, for example, at a first magnetic pole (Mp) and a third magnetic pole (Mp) in either circumferential direction.

Thus, in such a predetermined harmonic component, by selecting a plot-slot combination in which the force acting on one pole is periodically out of phase and by positioning magnetic poles (Mp) with a small magnetic flux located at the ends of the individual magnets 115 accordingly, the increase in the harmonic component of the cogging torque may be effectively suppressed.

On the other hand, for example, in the pole-slot combination of 44p36n, the pole pitch ($\beta$) is 5.5, and an appropriate out-of-phase pitch is not found in the n-th and 2n-th harmonic components of the cogging torque.

At least in the n-th harmonic component of the cogging torque, a pole-slot combination in which an out-of-phase pitch is a natural number is desirable. In detail, pole-slot combinations where the pole pitch ($\beta$) is 2N (where N is a natural number), which are shaded in the table in FIG. 11, is desirable.

As described above, according to the disclosure, an increase in harmonic components of the cogging torque may be suppressed by selecting desirable specific plot-slot combinations and hybridizing the magnets 115, each having multiple poles.

As a comparative example, the conventional motor 100 is described.

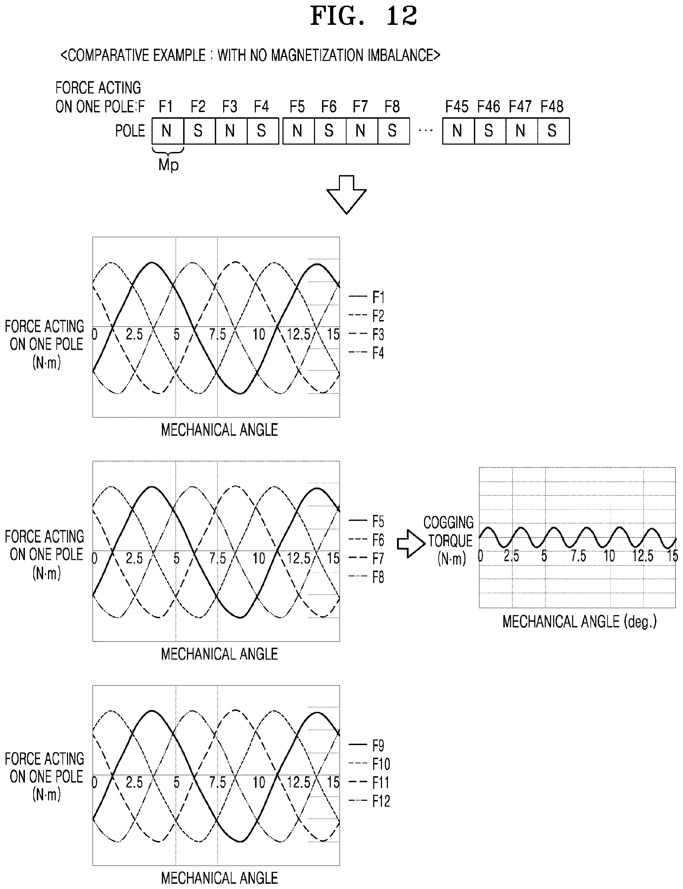

FIG. 12 is a diagram illustrating a configuration of cogging torque when there is no magnetization imbalance in a motor of the related art.

FIG. 12 illustrates the configuration of cogging torque in an ideal state (where there is no magnetization imbalance) in the conventional motor 100. As shown in a top diagram of FIG. 12, each magnet 115 in the conventional motor 100 has four magnetic poles Mp. The annular magnetic pole body 112 may be formed by arranging the 12 magnets 115 in an annular shape.

When the force acting on each of the magnetic poles (Mp) is F1 or the like, the cogging torque is the sum of forces acting on each of the total number of poles. Also, in this case, the pole pitch ($\beta$) is 4 (48/|48-36|=4), so the conventional motor 100 exhibits a periodicity with one period of 4 poles. Therefore, in the example shown in FIG. 12, F1=F5=F45, F2=F6=F46, F3=F7=F47, and F4=F8=F48. In other words, four magnetic pole groups (hereinafter, pole group) are formed, and a phase of the force acting on one pole in each pole group is the same.

The lower left diagram of FIG. 12 illustrates in detail the forces acting on each of the magnetic poles (Mp) shown in the top diagram. As described above, the forces acting on each of the magnetic poles (Mp) are added to form the cogging torque as shown in the lower right diagram of FIG. 12. Because there is no magnetization imbalance, cogging torques corresponding to the 36th and 72nd harmonic components from each of the magnets 115 are canceled out, as shown in the table of FIG. 11. As a result, a 144th order cogging torque corresponding to the least common multiple (LCM) of the number of magnetic poles and the number of slots, is formed.

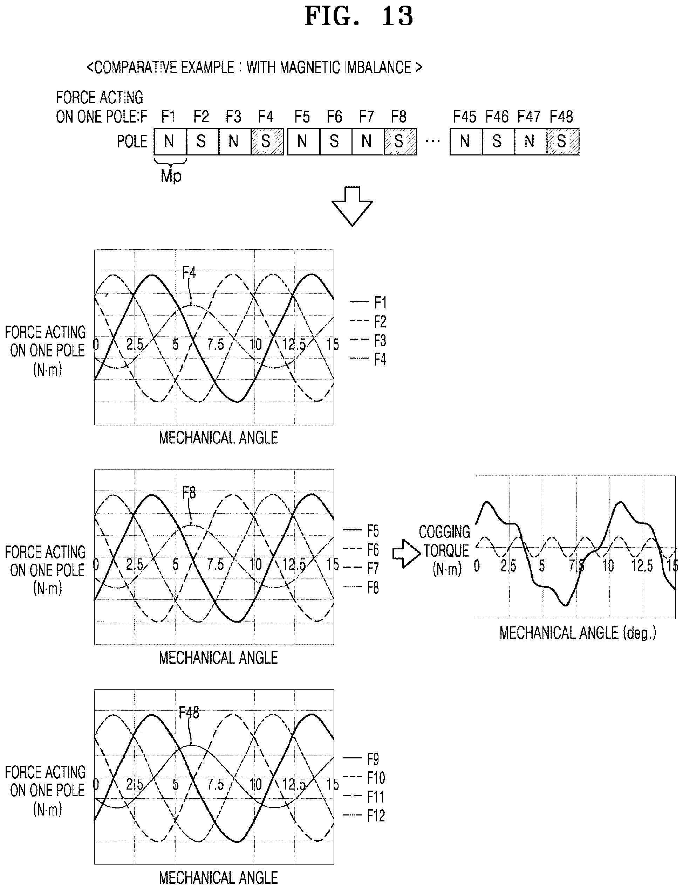

FIG. 13 is a diagram illustrating cogging torque when there is a magnetization imbalance in a motor of the related art.

Unlike FIG. 12, FIG. 13 illustrates components of the cogging torque in an unbalanced state (where there is a magnetization imbalance) in the conventional motor 100. FIG. 13 shows a case where a magnetic flux of a magnetic pole (Mp) on one end (a right side in FIG. 13) of each magnet 115 is reduced due to magnetization imbalance as shown in the top thereof.

In this case as well, the pole pitch (β) is 4, so a periodicity of one period with 4 poles appears. Therefore, F1=F5=F45, F2=F6=F46, F3=F7=F47, F4=F8=F48. Likewise, four pole groups are formed, each with the same phase of force acting on one pole.

The lower left diagram of FIG. 13 illustrates in detail the forces acting on each of the magnetic poles (Mp). The forces F4, F8, and F48 are smaller than the other forces. The 12 forces F4N (where N is a natural number from 1 to 12) including them are equally small in the same phase. Accordingly, the 36th harmonic component is added, resulting in a cogging torque with an increased 36th harmonic component, as shown in a lower right diagram of FIG. 13.

As a result, problematic noise occurs. Also, for comparison, the lower right diagram of FIG. 13 shows the cogging torque when there is no magnetization imbalance described above (the cogging torque shown in the lower right diagram of FIG. 12) with a dashed line.

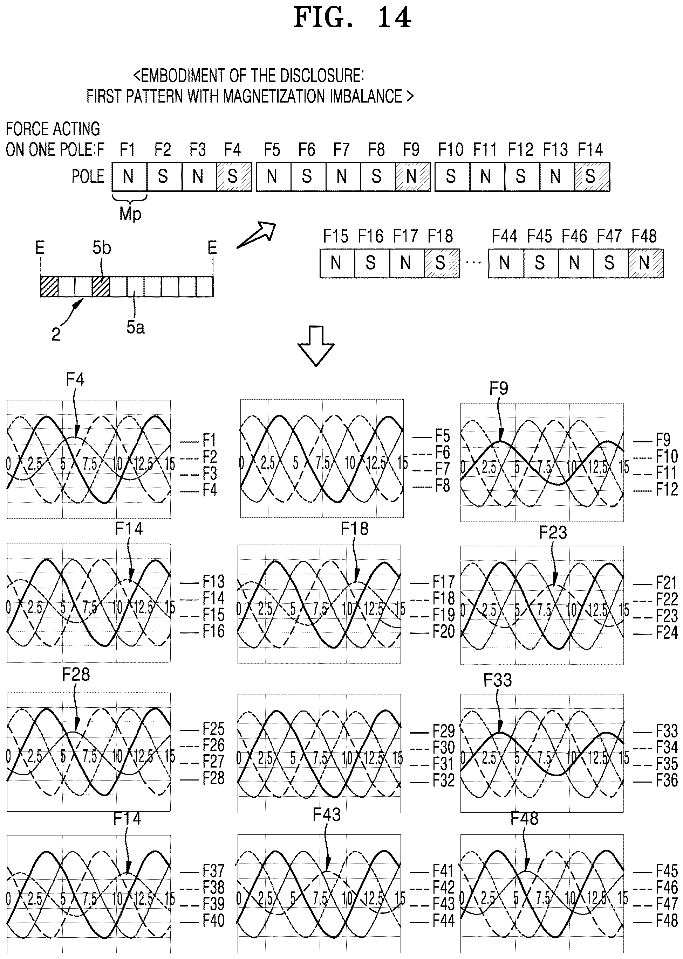

FIG. 14 is a diagram illustrating cogging torque for the motor 1000 according to an embodiment of the disclosure.

FIG. 14 shows an example of hybridization of the first pattern (two 4-pole magnets 5b and eight 5-pole magnets 5a) described with reference to FIG. 5. However, the arrangement of the magnets 115 here is different from that in the first pattern of FIG. 5 (i.e., two 5-pole magnets 5a between two 4-pole magnets 5b), as shown in the top of FIG. 14.

As illustrated by FIG. 14, similar to the conventional motor 100, in the first pattern, a magnetic flux of a magnetic pole (Mp) on one end (a right side in FIG. 14) of each magnet 115 is reduced due to magnetization imbalance. Because a pole-slot combination of the motor 1000 is the same as the pole-slot combination of the conventional motor 100, the pole pitch (β) is 4, and a periodicity of one period with 4 poles appears. Thus, like in the conventional motor 100, in the motor 1000, four pole groups (first to fourth groups) are formed, each with the same phase of the force acting on one pole.

In this case, for magnetic poles (Mp) for which magnetization is appropriate, four pole groups are F1=F5=F13=F17=F21=F25=F29=F37=F41=F45 (first group), F2=F6=F10=F22=F26=F30=F34=F42=f46 (second group), F3=F7=F11=F15=F19=F27=F31=F35=F39=F47 (third group), and F8=F12=F16=F20=F24=F32=F36=F40=F44 (fourth group).

On the other hand, for magnetic poles (Mp) with reduced magnetic flux, for which magnetization is inappropriate, four pole groups are F9=F33 (first group), F14=F18=F38 (second group), F23=F43 (third group), F4=F28=F48 (fourth group).

Among these groups, the force F9 in the first group and the force F23 in the third group are out of phase with each other and cancel each other out. In addition, the force F14 in the second group and the force F4 in the fourth group are out of phase with each other and cancel each other out. Therefore, even when there is a magnetization imbalance, some of the forces that cause it are canceled out, so an increase in the 36th harmonic component of the cogging torque may be suppressed.

In this way, because the hybridization may cancel out the forces that cause magnetization imbalance, an increase in the harmonic component of the cogging torque may be suppressed. As a result, problematic noise can be prevented. In addition, even when arrangement of the magnets 115 is different from that in the above example, the effect of suppressing the increase in the harmonic component of the cogging torque may be obtained although a different degree of effects are achieved. The same applies to the second pattern.

The first and second patterns described above are provide as examples. In an annular magnetic pole body 2 according to an embodiment of the disclosure, each of the magnets 115 included therein may be multipolar. In addition, because hybridization may be achieved by combining two or more types of magnets 115 with different numbers of magnetic poles, it is not limited to the two types, and three or more types of magnets 115 may be combined. The number of magnets 115 may also be selected depending on a pole-slot combination.

A method of determining such a combination of magnets 115 is described below. First, a combination of magnets 115 in the conventional motor 100 is described as a comparative example.

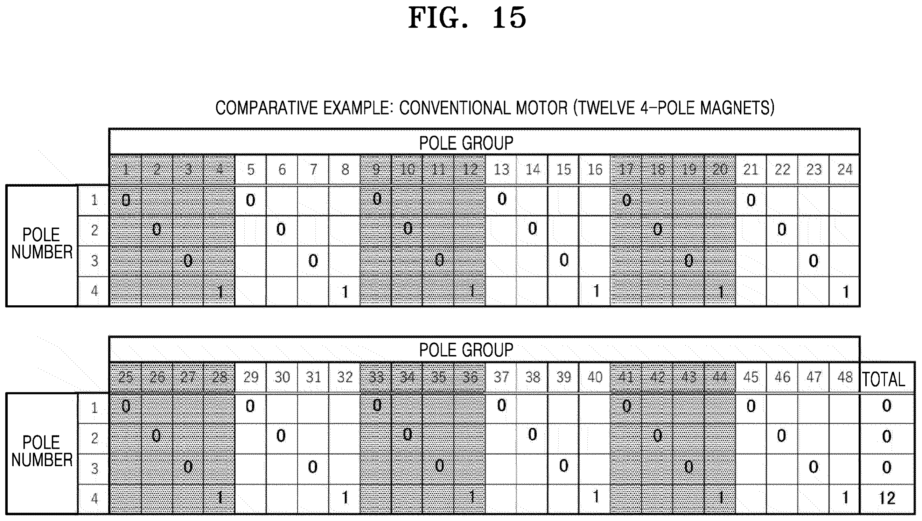

FIG. 15 is a configuration table of the annular magnetic pole body 112 in the conventional motor 100.T

The configuration table consists of pole numbers (rows) and pole groups (columns). A pole number is a number that identifies a magnetic pole (Mp) constituting the annular magnetic pole body 112. Pole numbers are assigned in the order from an arbitrary magnetic pole (Mp) in the circumferential direction. For the conventional motor 100, the number of magnetic poles is 48, so there are magnetic poles (Mp) numbered 1 to 48.

Pole groups are formed by classifying the magnetic poles (Mp) based on the pole pitch ($\beta$). In the case of the conventional motor 100, the pole pitch ($\beta$) is 4, so the magnetic poles (Mp) are classified into four pole groups (first group to fourth group).

The configuration table is shaded for each magnet. A cell containing 「0」 or 「1」 shown under each pole number corresponds to a pole group corresponding to the corresponding pole number. For example, a magnetic pole (Mp) with the pole number 1 belongs to the first group, and a magnetic pole (Mp) with the pole number 2 (Mp) belongs to the second group. 「0」 indicates that magnetization is appropriate, and 「1」 indicates that magnetization may be inappropriate. That is, 「1」 indicates a magnetic pole (Mp) (specific magnetic pole Mps) at an end of each magnet 115 where a magnetic flux is likely to be reduced due to magnetization imbalance. Here, a magnetic pole (Mp) at the end of each magnet 115 located on a side with a larger pole number is set as a specific magnetic pole (Mps) (a magnetic pole (Mp) on the opposite side may be set as such). Throughout the disclosure, a magnetic pole (Mp) at an end of each magnet 115 may be referred to as a specific magnetic pole (Mps) or a peculiar magnetic pole Mps.

For each pole group, the number of specific magnetic poles (Mps) (i.e., the number of 「1」's) may be counted. The number is shown in the total of the configuration table.

In the case of this pole-slot combination, as described above, the 36th harmonic components of the cogging torque are out of phase between pole groups whose group numbers have a difference equal to the pole pitch $\beta/2$ (i.e., 4/2=2).

In detail, the 36th harmonic components of the cogging torque are out of phase with each other between the first and third groups, and are out of phase in anti-phase with each other between the second and fourth groups. Therefore, a difference between the numbers of specific magnetic poles (Mps) in these two groups corresponds to an extent to which the 36th harmonic component of the cogging torque remains without being canceled out.

Therefore, the smaller the sum of differences in the number of specific magnetic poles (Mps) in these two groups, the more the 36th harmonic component of the cogging torque is suppressed. When a sum of the differences is 0, the 36th harmonic component of the cogging torque does not occur.

Even when the sum is not 0, i.e., even when the harmonic component of the cogging torque is present to some extent, this is allowable as long as it does not cause problematic noise. In detail, regardless of the order of the harmonic component, when the sum is less than or equal to half the number of magnets 115 constituting the annular magnetic pole body 112, this is an allowable condition.

In the case of the conventional motor 100 in which there are the 12 magnets 115, the allowable condition is that the sum is 6 or less.

In this case, the number of specific magnetic pole (Mps) in the first group is 0, and the number of specific magnetic poles (Mps) in the third group is also 0, so a difference between these numbers is 0. On the other hand, the number of specific magnetic poles (Mps) in the second group is 0, but the number of specific magnetic poles (Mps) in the fourth group is 12, so a difference between these numbers is 12 (>6).

In other words, the 36th harmonic components of the cogging torque are increased rather than canceled out. Also, the sum of the differences is 12, which exceeds the allowable condition. That is, problematic noise occurs.

Also, as described above, in the case of the same pole-slot combination, the 72nd harmonic components of the cogging torque are out of phase between pole groups whose group numbers have a difference equal to the pole pitch $\beta/4$ (i.e., 4/4 = 1).

In detail, the 72nd harmonic components of the cogging torque are out of phase with each other between the first and second groups, and are out of phase with each other between the third and fourth groups. Therefore, the smaller the sum of differences in the number of specific magnetic poles (Mps) in these two groups, the more the increase in the 72nd harmonic component of the cogging torque may be suppressed. When the sum of the differences is 0, the 72nd harmonic component of the cogging torque does not occur.

And, even when the sum is not 0, as described above, when the sum is less than or equal to half the number of magnets 115 constituting the annular magnetic pole body 112, the allowable condition is satisfied.

In this case, because the number of specific magnetic poles (Mps) in each of the first to third groups is 0, and the number of specific magnetic poles (Mps) in the fourth group is 12, a difference between the numbers of specific magnetic poles (Mps) in the first and second groups is 0, but a difference between the numbers of specific magnetic poles (Mps) in the third and fourth groups is 12.

Thus, the 72nd harmonic components of the cogging torque are increased rather than canceled out. Also, in this case as well, the sum of the differences is 12, which exceeds the allowable condition. That is, problematic noise occurs.

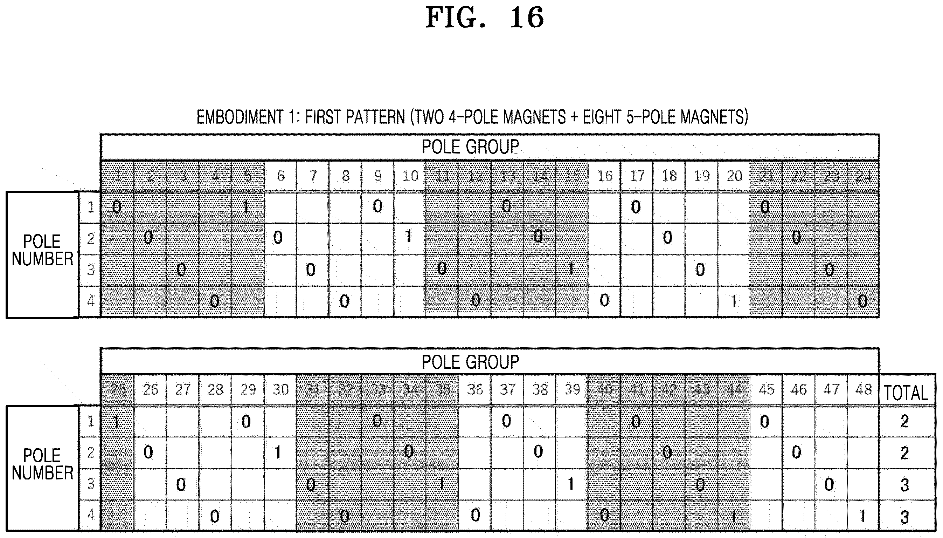

FIG. 16 is a configuration table of an annular magnetic pole body according to an embodiment of the disclosure.

FIG. 16 shows a configuration table of an improved annular magnetic pole body 2 (corresponding to the first pattern shown in FIG. 5) as an example of hybridization, according to an embodiment of the disclosure. Because the content of the configuration table is the same as in the comparative example, a description thereof is omitted (the same applies hereinafter).

A pole-slot combination according to FIG. 16 is the same as that of the conventional motor 100 (48p36n). Accordingly, the organization of pole numbers and pole groups is the same as in the case of the conventional motor 100. By hybridization, the improved annular magnetic pole body 2 differs from the conventional motor 100 in that it is composed of two 4-pole magnets 5b and eight 5-pole magnets 5a.

Due to the difference, the specific magnetic poles (Mps) ( 「1」 's) may be dispersed and classified into different magnetization groups. As a result, the number of specific magnetic poles (Mps) in each of first and second groups is 2, and the number of specific magnetic poles (Mps) in each of third and fourth groups is 3.

A difference between the numbers of specific magnetic poles (Mps) in the first and third groups is 1 (|2-3|=1), and a difference between the numbers of specific magnetic poles (Mps) in the second and fourth groups is also 1 (|2-3|=1). Therefore, a sum of the differences in the number of specific magnetic poles (Mps) in these two groups is 2.

Therefore, compared to the conventional motor 100, an increase in the 36th harmonic component of the cogging torque is suppressed. Furthermore, although there is some 36th harmonic component in the cogging torque, problematic noise does not occur because the sum satisfies the allowable condition (the sum is 5 or less).

Also, a difference between the numbers of specific magnetic poles (Mps) in the first and second groups is 0 (|2-2|=0), and a difference between the numbers of specific magnetic poles (Mps) in the third and fourth groups is also 0 (|3-3|=0). And, a sum of the differences in the number of specific magnetic poles (Mps) in these two groups is 0.

Thus, the 72nd harmonic components of the cogging torque cancel out and are not generated. Accordingly, no problematic noise occurs.

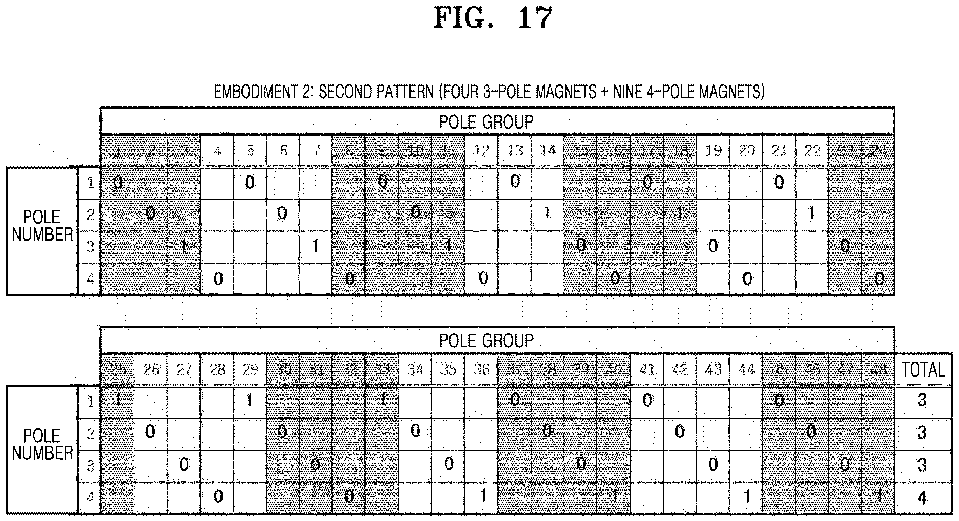

FIG. 17 is a configuration table of an annular magnetic pole body according to an embodiment of the disclosure.

FIG. 17 shows a configuration table of an improved annular magnetic pole body 2 (corresponding to the second pattern shown in FIG. 6) as an example of hybridization, according to an embodiment of the disclosure. The improved annular magnetic pole body with reference to FIG. 17 may be referred to as a second improved annular magnetic pole body to be distinguished from the improved annular magnetic pole body with reference to FIG. 16 which may be referred to as a first improved annular magnetic pole body.

A pole-slot combination of FIG. 17 is the same as that of the conventional motor 100 (48p36n). Accordingly, the organization of pole numbers and pole groups is the same as for the conventional motor 100. By hybridization, the improved annular magnetic pole body 2 differs from the conventional motor 100 in that it is composed of four 3-pole magnets 5c and nine 4-pole magnets 5b.

Due to the difference, the specific magnetic poles (Mps) ( 「1」 's) are dispersed and classified into different magnetization groups. As a result, the number of specific magnetic poles (Mps) in each of first and second groups is 3, and the number of specific magnetic poles (Mps) in a fourth group is 4.

A difference between the numbers of specific magnetic poles (Mps) in the first and third groups is 0 (|3-3|=0), and a difference between the numbers of specific magnetic poles (Mps) in the second and fourth groups is 1 (|3-4|=1). Therefore, a sum of the differences in the number of specific magnetic poles (Mps) in these two groups is 1.

Therefore, compared to the conventional motor 100, an increase in the 36th harmonic component of the cogging torque is suppressed. Furthermore, although there is some 36th harmonic component in the cogging torque, problematic noise does not occur because the sum satisfies the allowable condition (the sum is 6.5 or less).

Also, a difference between the numbers of specific magnetic poles (Mps) in the first and second groups is 0 (|3-3|=0), and a difference between the numbers of specific magnetic poles (Mps) in the third and fourth groups is 1 (|3-4|=1). Therefore, a sum of the differences in the number of specific magnetic poles (Mps) in these two groups is 1.

Therefore, compared to the conventional motor 100, an increase in the 72nd harmonic component of the cogging torque is suppressed. Furthermore, although there is some 72nd harmonic component in the cogging torque, problematic noise does not occur because the sum satisfies the allowable condition (the sum is 6.5 or less).

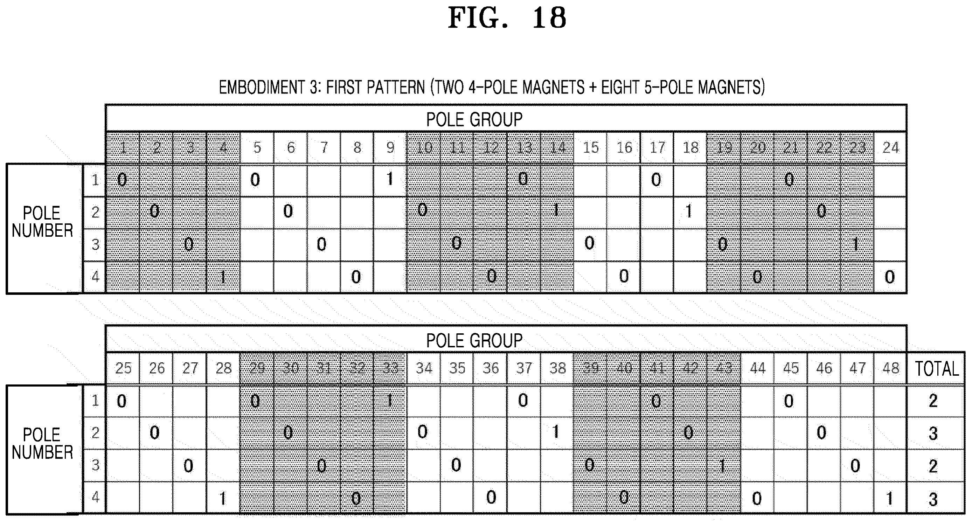

FIG. 18 is a configuration table of an annular magnetic pole body according to an embodiment of the disclosure.

FIG. 18 shows a configuration table of a third improved annular magnetic pole body 2 (a third pattern) as an example of hybridization, according to an embodiment of the disclosure.

A pole-slot combination in FIG. 18 is the same as that in the first pattern of FIG. 14. By hybridization, the improved annular magnetic pole body 2 is composed of the two 4-pole magnets 5b and the eight 5-pole magnets 5a.

Due to the difference, the specific magnetic poles (Mps) ( 「1」 's) are dispersed and classified into different magnetization groups. As a result, the total number of specific magnetic poles (Mps) in each of the first and third groups is 2, and the total number of specific magnetic poles (Mps) in each of the second and fourth groups is 3.

A difference between the numbers of specific magnetic poles (Mps) in the first and third groups is 0 (|2-2|=0), and a difference between the numbers of specific magnetic poles (Mps) in the second and fourth groups is also 0 (|3-3|=0). Therefore, a sum of the differences in the number of specific magnetic poles (Mps) in these two groups is 0.

Thus, the 36th harmonic components of the cogging torque cancel out and are not generated. Accordingly, no problematic noise occurs.

Also, a difference between the numbers of specific magnetic poles (Mps) in the first and second groups is 1 (|2-3|=1), and a difference between the numbers of specific magnetic poles (Mps) in the third and fourth groups is also 1 (|2-3|=1). Therefore, a sum of the differences in the number of specific magnetic poles (Mps) in these two groups is 2.

Therefore, compared to the conventional motor 100, an increase in the 72nd harmonic component of the cogging torque is suppressed. Furthermore, although there is some 72nd harmonic component in the cogging torque, problematic noise does not occur because the sum satisfies the allowable condition (the sum is 5 or less).

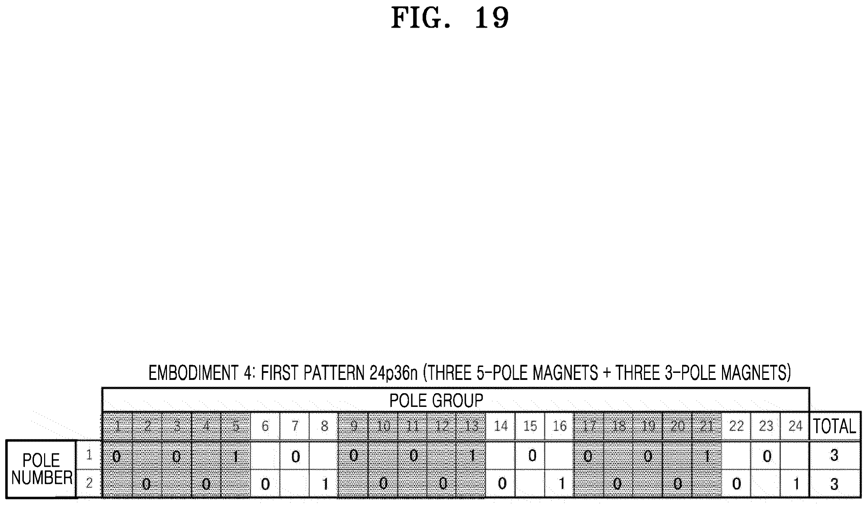

FIG. 19 is a configuration table of an annular magnetic pole body according to an embodiment of the disclosure. In FIG. 19, a configuration table of a fourth improved annular magnetic pole body 2 according to an embodiment of the disclosure is shown.

A pole-slot combination (24p36n) in FIG. 19 is different from that of the conventional motor 100. Pole numbers are from 1 to 24. Pole groups are a first group and a second group (a pole pitch ($\beta$) is 24/|24-36|=2). By hybridization, the fourth improved annular magnetic pole body 2 is composed of three 5-pole magnets 5a and three 3-pole magnets 5c (6 in total).

Due to the difference, the specific magnetic poles (Mps) ($\lceil 1 \rfloor$'s) are dispersed and classified into different magnetization groups. As a result, the number of specific magnetic poles (Mps) in the first group is 3, and the number of specific magnetic poles (Mps) in the second group is also 3. Also, a difference between the numbers of specific magnetic poles (Mps) in the first group and the second group is 0 (|3-3|=0).

Thus, the 36th harmonic components of the cogging torque cancel out and are not generated. Accordingly, no problematic noise occurs.

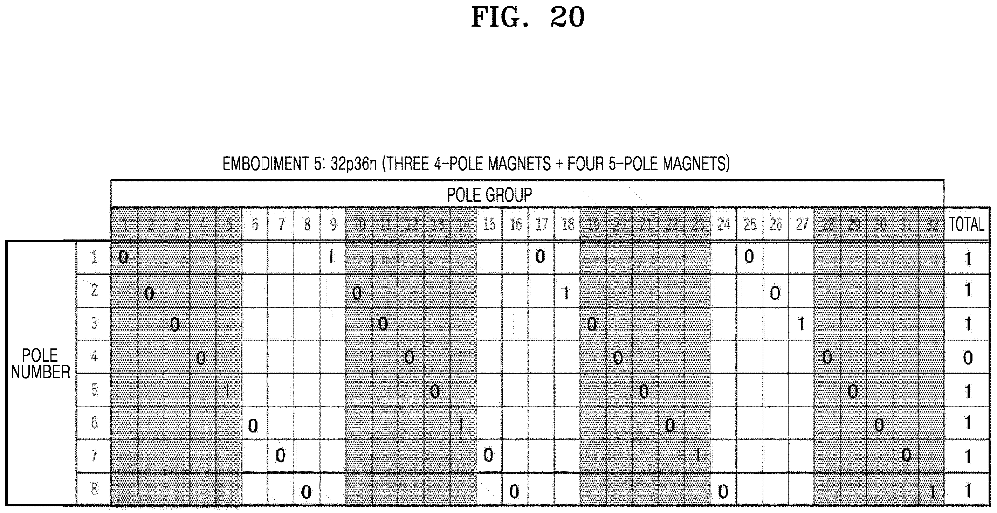

FIG. 20 is a configuration table of an annular magnetic pole body according to an embodiment of the disclosure.

In FIG. 20, a configuration table of a fifth improved annular magnetic pole body 2 according to an embodiment of the disclosure is shown.

A pole-slot combination (32p36n) in FIG. 20 is different from that of the conventional motor 100. Pole numbers are from 1 to 32. Pole groups are classified as first to eighth groups (a pole pitch ($\beta$) is 32/|32-36|=8). By hybridization, the fifth improved annular magnetic pole body 2 is composed of three 4-pole magnets 5b and four 5-pole magnets 5a (7 in total).

Due to the difference, the specific magnetic poles (Mps) ($\lceil 1 \rfloor$'s) are dispersed and classified into different magnetization groups.

In the case of this pole-slot combination, a difference between pole group numbers where the 36th harmonic components of the cogging torque are out of phase is 4 (8/2 = 4). Therefore, combinations of groups with such a relationship are the first group and the fifth group, the second group and the sixth group, the third group and the seventh group, and the fourth group and the eighth group.

And, differences between the numbers of specific magnetic poles (Mps) in each combination of the two groups are 0 (|1-1|=0), 0 (|1-1|=0), 0 (|1-1|=0), and 1 (|0-1| =1), respectively. Therefore, a sum of the differences in the number of specific magnetic poles (Mps) in these groups is 1.

Therefore, cancellation due to out-of-phase occurs in the 36th harmonic component of the cogging torque, and an increase in the harmonic component is suppressed. Furthermore, although there is some 36th harmonic component in the cogging torque, problematic noise does not occur because the sum satisfies an allowable condition (the sum is 3.5 (=7/2) or less).

Also, for this pole-slot combination, a difference between pole group numbers where the 72nd harmonic components of the cogging torque are out of phase is 2 (8/4 = 2). Therefore, combinations of groups with such a relationship are the first group and the third group, the second group and the fourth group, the third group and the fifth group, and the sixth group and the eighth group.

And, differences between the numbers of specific magnetic poles (Mps) in each combination of the two groups are 0 (|1-1|=0), 1 (|1-0|=1), 0 (|1-1|=0), and 0 (|1-1| =0), respectively. Therefore, a sum of the differences in the number of specific magnetic poles (Mps) in these groups is 1.

Therefore, cancellation due to out-of-phase occurs in the 72nd harmonic component of the cogging torque, and an increase in the harmonic component is suppressed. Furthermore, although there is some 72nd harmonic component in the cogging torque, problematic noise does not occur because the sum satisfies the allowable condition (the sum is 3.5 (=7/2) or less).

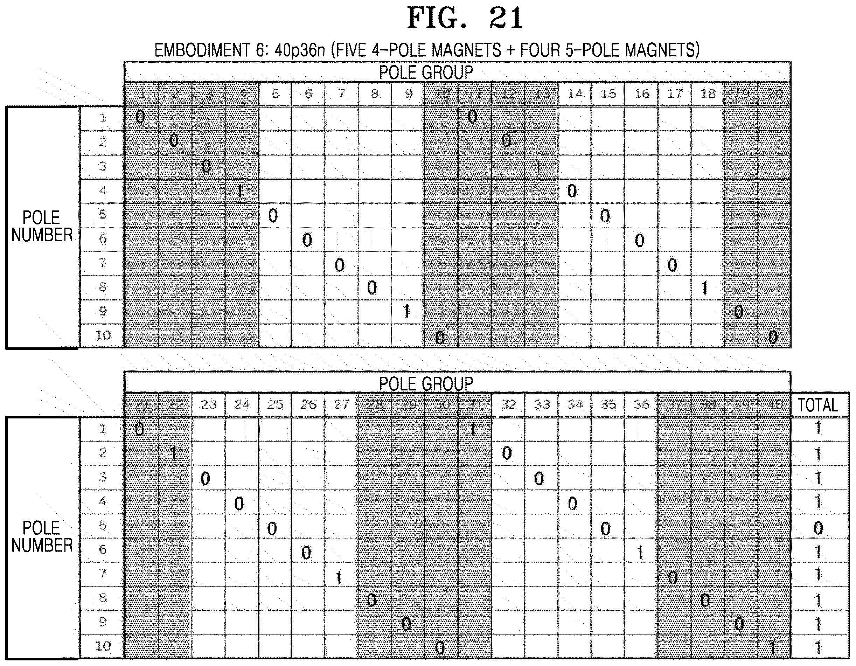

FIG. 21 is a configuration table of an annular magnetic pole body according to an embodiment of the disclosure.

In FIG. 21, a configuration table of a sixth improved annular magnetic pole body 2 according to an embodiment of the disclosure is shown.

A pole-slot combination (40p36n) in FIG. 21 is different from that of the conventional motor 100. Pole numbers are from 1 to 40. Pole groups are classified as first to tenth groups (a pole pitch ($\beta$) is 40/|40-36|=10). By hybridization, the sixth improved annular magnetic pole body 2 is composed of five 4-pole magnets 5b and four 5-pole magnets 5a (9 in total).

Due to the difference, the specific magnetic poles (Mps) ( 「1」 's) are dispersed and classified into different magnetization groups.

In the case of this pole-slot combination, a difference between pole group numbers where the 36th harmonic components of the cogging torque are out of phase is 5 (10/2 = 5). Therefore, combinations of groups with such a relationship are the first group and the sixth group, the second group and the seventh group, the third group and the eighth group, and the fifth group and the tenth group.

And, differences between the numbers of specific magnetic poles (Mps) in each combination of the two groups are 0 (|1-1|=0), 0 (|1-1|=0), 0 (|1-1|=0), and 1 (|0-1| =1), respectively. Therefore, a sum of the differences in the number of specific magnetic poles (Mps) in these groups is 1.

In other words, in this case, cancellation due to out-of-phase occurs in the 36th harmonic component of the cogging torque, and an increase in the harmonic component is suppressed. Furthermore, although there is some 36th harmonic component in the cogging torque, problematic noise does not occur because the sum satisfies an allowable condition (the sum is 4.5 (=9/2) or less).

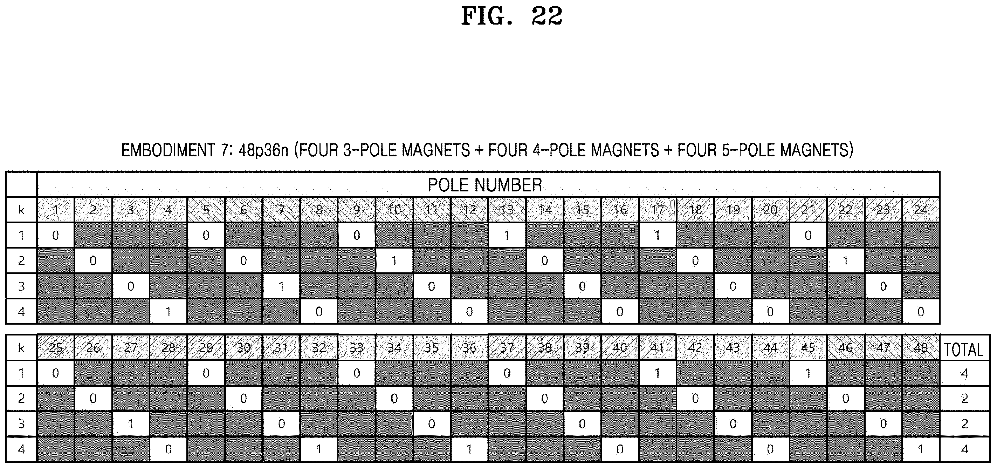

FIG. 22 is a configuration table of an annular magnetic pole body according to an embodiment of the disclosure.

FIG. 22 shows a configuration table of an improved annular magnetic pole body 2 as an example of hybridization, according to an embodiment of the disclosure.

A pole-slot combination according to FIG. 22 is the same as that of the conventional motor 100 (48p36n). Accordingly, the organization of pole numbers and pole groups is the same as in the case of the conventional motor 100. By hybridization, the improved annular magnetic pole body 2 differs from the conventional motor 100 in that it is composed of four 3-pole magnets 5c, four 4-pole magnets 5b, and four 5-pole magnets 5a.

Due to the difference, the specific magnetic poles (Mps) ( 「1」 's) may be dispersed and classified into different magnetization groups. As a result, the number of specific magnetic poles (Mps) in each of first and four groups is 4, and the number of specific magnetic poles (Mps) in each of second and third groups is 2.

A difference between the numbers of specific magnetic poles (Mps) in the first and third groups is 2 (| 4-2|=2), and a difference between the numbers of specific magnetic poles (Mps) in the second and fourth groups is also 2 (|2-4|=2). Therefore, a sum of the differences in the number of specific magnetic poles (Mps) in these two groups is 4.

In other words, in this case, compared to the conventional motor 100, an increase in the 36th harmonic component of the cogging torque is suppressed. Furthermore, although there is some 36th harmonic component in the cogging torque, problematic noise does not occur because the sum satisfies the allowable condition (the sum is 6 or less).

Also, a difference between the numbers of specific magnetic poles (Mps) in the first and second groups is 2 (|4-2|=2), and a difference between the numbers of specific magnetic poles (Mps) in the third and fourth groups is also 2 (|2-4|=2). And, a sum of the differences in the number of specific magnetic poles (Mps) in these two groups is 4.

Therefore, compared to the conventional motor 100, an increase in the 72nd harmonic component of the cogging torque is suppressed. Furthermore, although there is some 72nd harmonic component in the cogging torque, problematic noise does not occur because the sum satisfies the allowable condition (the sum is 6 or less).

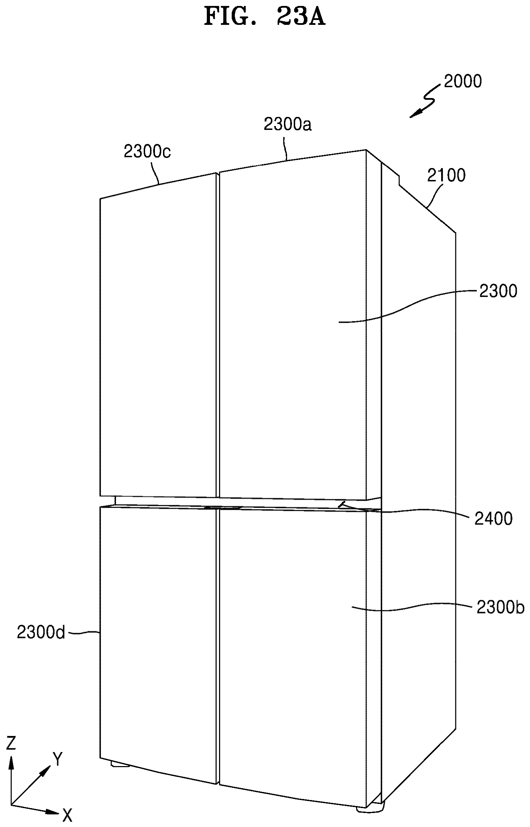

FIG. 23A is a perspective view of a refrigerator 2000 employing a motor including an improved annular magnetic pole body, according to an embodiment of the disclosure.

While the disclosure has been described mainly with respect to the case where the motor 1000 including the improved annular magnetic pole body 2 according to an embodiment of the disclosure is used in a washing machine 1, the motor 1000 including the improved annular magnetic pole body 2 according to an embodiment of the disclosure is not limited to use in the washing machine 1, but may be used in a variety of home appliances, such as a refrigerator 2000, that include a motor.

FIG. 23A is a perspective view of a refrigerator 2000 using the motor 1000 including the improved annular magnetic pole body 2 according to an embodiment of the disclosure.

According to an embodiment of the disclosure, the refrigerator 2000 may include a body 2100.

The body 2100 may include an inner case, an outer case provided outside the inner case, and an insulation material provided between the inner case and the outer case.

The" inner case" may include a case, a plate, a panel, or a liner forming a storage compartment. The inner case may be formed as a single body or may be formed by assembling a plurality of plates. The "outer case" may form an exterior of the body 2100 and may be coupled to an outside of the inner case so that the insulation material is provided between the inner case and the outer case.

The "insulation material" may insulate an inside of the storage compartment and an outside of the storage compartment so that a temperature inside the storage compartment may be maintained at a set appropriate temperature without being affected by an environment outside the storage compartment. According to an embodiment of the disclosure, the insulation material may include a foam insulation material. After fixing the inner case and the outer case with a jig, etc., the foam insulation material may be molded by injecting and foaming a urethane foam in which polyurethane and a foaming agent are mixed between the inner case and the outer case.

According to an embodiment of the disclosure, the insulation material may include a vacuum insulation material in addition to the foam insulation material, or may include only the vacuum insulation material instead of the foam insulation material. The vacuum insulation material may include a core material and an outer covering material that accommodates the core material and seals an interior to a vacuum or a pressure close to the vacuum. The vacuum insulation material may further include an adsorbent that adsorbs gas and moisture to stably maintain a vacuum state. However, the insulation material is not limited to the foam insulation material or vacuum insulation material described above and may include various materials that may be used for insulation.

According to an embodiment of the disclosure, the refrigerator 2000 may include a cold air supply device provided to supply cold air to the storage compartment.

The "cold air supply device" may include a machine, a device, an electronic device, and/or a system that is a combination thereof that are capable of producing cold air and guiding the cold air to cool the storage compartment.

According to an embodiment of the disclosure, the cold air supply device may produce cold air through a refrigeration cycle including compression, condensation, expansion, and evaporation of a refrigerant. To this end, the cold air supply device may include a refrigeration cycle system having a compressor, a condenser, an expansion device, and an evaporator capable of driving a refrigeration cycle.

According to an embodiment of the disclosure, the refrigerator 2000 may include a machine compartment in which at least some components belonging to the cold air supply device are arranged.

The "machine compartment" may be separated and insulated from the storage compartment to prevent heat generated in components arranged in the machine compartment from being transferred to the storage compartment. The inside of the machine compartment may be configured to communicate with the outside of the body 2100 so as to dissipate heat from components inside the machine compartment.

The refrigerator 2000 is a type of home appliance that supplies cold air generated by the compressor of the cold air supply device to the storage compartment to freshly preserve various foods for a long period of time. In addition to this long-term preservation function, the refrigerator 2000 has various other functions added, and representative functions include a communication function that allows the refrigerator 2000 to be connected to an Internet of Things (IoT) network and a function of outputting sound via a speaker built into the refrigerator 2000.

Referring to FIG. 23A, according to an embodiment of the disclosure, the refrigerator 2000 may include the body 2100 and a plurality of doors 2300 capable of opening and closing the storage compartment.

According to an embodiment of the disclosure, the refrigerator 2000 may include the doors 2300 configured to open and close one open side of the storage compartment.

The refrigerator 2000 of FIG. 23A is shown to have four doors 2300, but the number of doors 2300 is not limited thereto, and an upper door 2300a and a lower door 2300b on a right side of the refrigerator 2000 may be configured as one door, and an upper door 2300c and a lower door 2300d on a left side of the refrigerator 2000 may be configured as one door. Also, the number of doors 2300 in the refrigerator 2000 may be greater than or less than 4. The position of the doors 2300 may also be varied. The refrigerator 2000 may be classified as a French door type refrigerator, a side-by-side type refrigerator, or the like according to arrangement of the doors 2300 and the storage compartment. There may be a handle area 2400 between the plurality of doors 2300, i.e., the upper doors 2300a and 2300c and the lower doors 2300b and 2300d, which is a space where the user is able to insert his or her hand to open and close the doors 2300.

The doors 2300 may be configured to seal the storage compartment 2200 when the doors 2300 are closed. The doors 2300 may include an insulation material like in the body 2100 to insulate the storage compartment when the doors 2300 are closed.

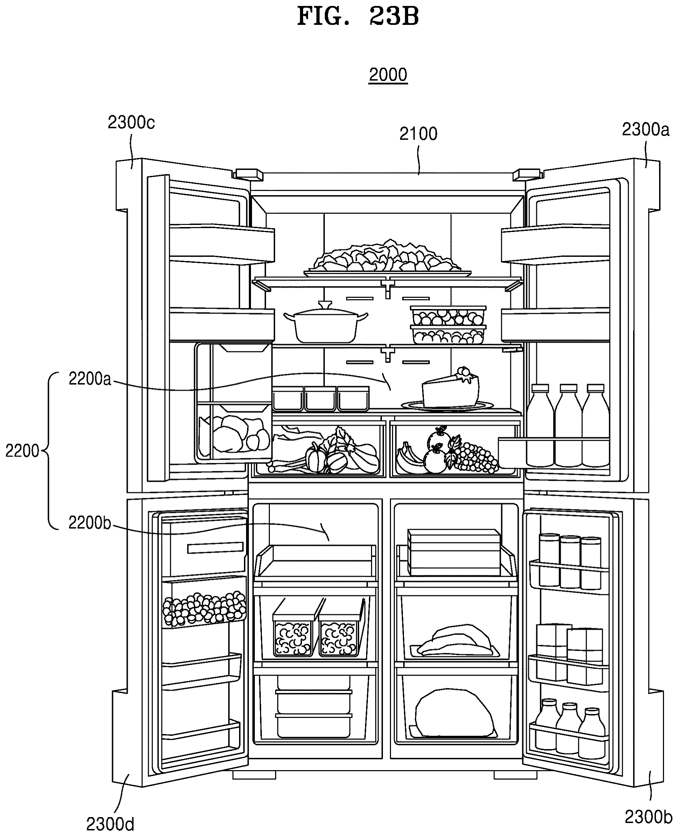

FIG. 23B is a front view illustrating the interior of a refrigerator among home appliances, according to an embodiment of the disclosure.

Referring to FIG. 23B, the body 2100 of the refrigerator 2000 may include a storage compartment 2200 for refrigerating or freezing various foods.

The storage compartment 2200 may include a space defined by the inner case. The storage compartment 2200 may further include an inner compartment defining the space. The storage compartment 2200 may have at least one side opened to put in or take out the foods. The storage compartment 2200 may be provided to store food. The food includes food that can be eaten or drunk, and specifically, may include meat, fish, seafood, fruits, vegetables, water, ice, beverages, kimchi, or alcoholic beverages such as wine. However, in addition to the food, medicines and cosmetics may also be stored in the storage compartment 2200, and there is no limitation on items that may be stored in the storage compartment 2200.

The refrigerator 2000 may include one or more storage compartments 2200. When two or more storage compartments 2200 are provided in the refrigerator 2000, each of the storage compartments 2200 may have a different purpose and may be maintained at a different temperature. To this end, the storage compartments 2200 may be separated from each other by a partition wall including an insulation material. According to an embodiment of the disclosure, the partition wall may be a portion of the body 2100. According to an embodiment of the disclosure, the partition wall may be a separate partition that is provided separately from the body 2100 and assembled to the body 2100.

The storage compartment 2200 may be provided to be maintained in an appropriate temperature range depending on its use, and include a refrigeration compartment 2200a, a freezer compartment 2200b, or a "variable temperature compartment" differentiated according to its use and/or temperature range. The refrigeration compartment 2200a may be maintained at a temperature suitable for refrigerating food, and the freezer compartment 2200b may be maintained at a temperature suitable for freezing food. "Refrigeration" may mean cooling food without freezing the food, and for example, the refrigeration compartment 2200a may be maintained in a range between 0 °C and 7 °C. "Freezing" may mean freezing food or cooling the food so that it remains frozen, and for example, the freezer compartment 2200b may be maintained in a range between -20 °C and - 1 °C. The variable temperature compartment may be used as either the refrigeration compartment 2200a or the freezer compartment 2200b based on or regardless of a user's selection. According to an embodiment of the disclosure, one storage compartment 2200 may be provided such that a portion thereof is used as the refrigeration compartment 2200a and a portion thereof is used as the freezer compartment 2200b.

The storage compartment 2200 may be referred to as various names, such as a "vegetable compartment", a "fresh compartment", a "cooling compartment", and an "ice-making compartment" in addition to names such as the refrigeration compartment 2200a, the freezer compartment 2200b, and the variable temperature compartment, and as used herein, the terms "refrigeration compartment", "freezer compartment", and "variable temperature compartment" should be understood to each encompass the storage compartment 2200 having a corresponding use and a corresponding temperature range.

When the compressor of the refrigerator 2000 operates, the motor 1000 that drives the compressor plays an important role. The compressor of the refrigerator 2000 may be driven by the motor 1000 including the improved annular magnetic pole body 2 according to an embodiment of the disclosure. As a motor used not only in the compressor but also within the refrigerator 2000, the motor 1000 including the improved annular magnetic pole body 2 according to an embodiment of the disclosure may be used.

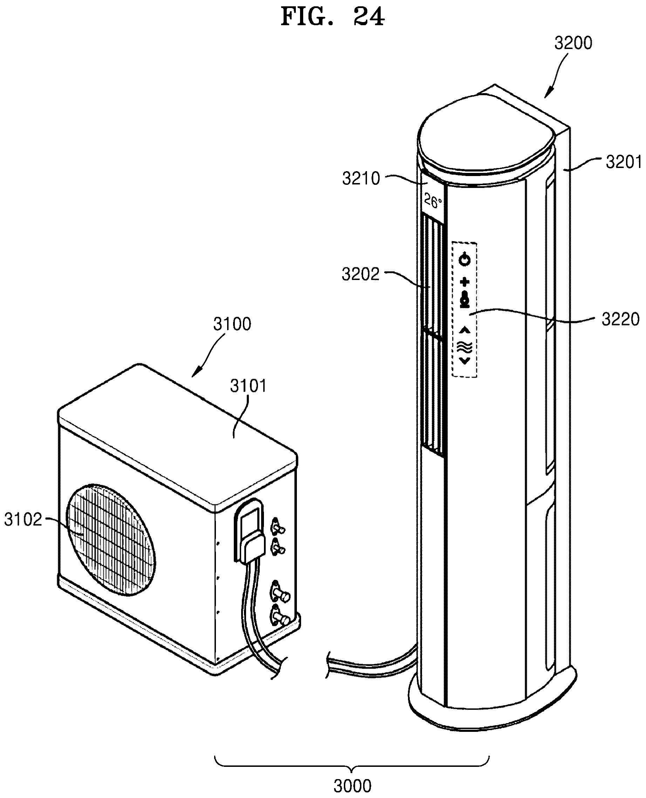

FIG. 24 is a perspective view illustrating an air conditioner, according to an embodiment of the disclosure.

FIG. 24 is a perspective view of an air conditioner 3000 using the motor 1000 including the improved annular magnetic pole body 2 according to an embodiment of the disclosure.

According to an embodiment of the disclosure, to cool a space to be air-conditioned, the air conditioner 3000 may absorb heat from an air-conditioning space (hereinafter referred to as "an indoor space") and release heat to the outside of the air-conditioning space (hereinafter referred to as "an outdoor space"). Furthermore, for heating the indoor space, the air conditioner 3000 may absorb heat from the outdoor space and release heat to the indoor space.

The air conditioner 3000 may include one or two or more outdoor units 3100 installed outdoors and one or two or more indoor units 3200 installed indoors. The outdoor unit 3100 may be electrically connected to the indoor unit 3200. For example, a user may input information (or commands) for controlling the indoor unit 3200 via a user interface, and the outdoor unit 3100 may operate in response to a user input from the indoor unit 3200.

The outdoor unit 3100 may be fluidly coupled to the indoor unit 3200 through a refrigerant pipe.

The outdoor unit 3100 is located outdoors. The outdoor unit 3100 may perform heat exchange between a refrigerant and outdoor air by using a phase change (e.g., evaporation or condensation) of the refrigerant. In this case, the heat exchange may be performed via an outdoor heat exchanger included in the outdoor unit 3100. For example, the refrigerant may release heat into the outdoor air during condensation of the refrigerant in the outdoor unit 3100. The refrigerant may absorb heat from the outdoor air during evaporation of the refrigerant in the outdoor unit 3100.

The indoor unit 3200 is installed indoors. The indoor unit 3200 may perform heat exchange between a refrigerant and indoor air by using a phase change (e.g., evaporation or condensation) of the refrigerant. In this case, the heat exchange may be performed via an indoor heat exchanger included in the indoor unit 3200. For example, while the refrigerant evaporates in the indoor unit 3200, the refrigerant may absorb heat from the indoor air, and the indoor space may be cooled. While a refrigerant condenses in the indoor unit 3200, the refrigerant may release heat into the indoor air, and the indoor space may be heated. The air conditioner 3000 may include the compressor, the outdoor heat exchanger, the expansion device, and the indoor heat exchanger. The air conditioner may include a refrigerant pipe connecting the compressor, the outdoor heat exchanger, the expansion device, and the indoor heat exchanger.

The refrigerant may circulate, via the refrigerant pipe, through the compressor, the outdoor heat exchanger, the expansion device, and the indoor heat exchanger in the stated order, or through the compressor, the indoor heat exchanger, the expansion device, and the outdoor heat exchanger in the stated order.

The compressor, the outdoor heat exchanger, and the expansion device may be located in the outdoor unit 3100. The indoor heat exchanger may be installed in the indoor unit 3200. The location of the expansion device is not limited to the outdoor unit 3100, and may be located in the indoor unit 3200 as needed.

The compressor may suck in refrigerant gas through a suction port and compress the refrigerant gas. The compressor may discharge high-temperature, high-pressure refrigerant gas via a discharge port. According to an embodiment of the disclosure, the compressor may perform a compression operation via the motor 1000 including the improved annular magnetic pole body 2.

The air conditioner 3000 may further include a flow path diverter valve. The flow path diverter valve may include, for example, a 4-way valve. The flow path diverter valve may determine a path of circulation of the refrigerant depending on an operating mode of the air conditioner 3000 (e.g., cooling operation or heating operation). The flow path diverter valve may be connected to the discharge port of the compressor.

The air conditioner 3000 may include an accumulator. The accumulator may be connected to the suction port of the compressor. Low-temperature, low-pressure refrigerant evaporated from the indoor heat exchanger or an outdoor heat exchanger may flow into the accumulator. When a mixture of refrigerant liquid and refrigerant gas flows into the accumulator, the accumulator may separate the refrigerant liquid from the refrigerant gas and provide the refrigerant gas from which the refrigerant liquid has been separated to the compressor.

In the outdoor heat exchanger, heat exchange may occur between the refrigerant and the outdoor air. For example, during cooling operation, high-pressure, high-temperature refrigerant may condense in the outdoor heat exchanger, and while the refrigerant condenses, the refrigerant may release heat into the outdoor air. During heating operation, low-pressure, low-temperature refrigerant may evaporate in the outdoor heat exchanger, and while the refrigerant evaporates, the refrigerant may absorb heat from the outdoor air.

An outdoor fan may be provided in the vicinity of the outdoor heat exchanger. The outdoor fan may blow outdoor air into the outdoor heat exchanger to facilitate heat exchange between the refrigerant and the outdoor air.

The expansion device may lower the pressure and temperature of the refrigerant condensed in the outdoor heat exchanger during cooling operation, and may lower the pressure and temperature of the refrigerant condensed in the indoor heat exchanger during heating operation.

For example, the expansion device may lower the temperature and pressure of the refrigerant by using a throttling effect. The expansion device may include an orifice capable of reducing a cross-sectional area of a flow path. The temperature and pressure of the refrigerant that passes through the orifice may be lowered.

For example, the expansion device may be implemented as an electronic expansion valve capable of adjusting an opening ratio (a ratio of a cross-sectional area of a flow path in a valve in a partially open state to a cross-sectional area of a flow path in the valve in a fully open state). The amount of refrigerant passing through the expansion device may be controlled depending on the opening ratio of the electronic expansion valve.

The indoor unit 3200 of the air conditioner 3000 may include a housing, a blower that circulates air inside or outside the housing, and an indoor heat exchanger that exchanges heat with air flowing into the housing.

The housing may include an air inlet. Indoor air may be drawn into the housing via the air inlet.

The indoor unit 3200 of the air conditioner 3000 may include a filter provided to filter out foreign substances from the air drawn into the housing via the air inlet.

The housing may include an air outlet. Air flowing inside the housing may be discharged from the housing via the air outlet.

The indoor unit 3200 of the air conditioner 3000 may include an airflow guide that guides a direction of air discharged through the air outlet. For example, the airflow guide may include a blade located on the air outlet. For example, the airflow guide may include an auxiliary fan for regulating an exhaust airflow. However, the disclosure is not limited thereto, and the airflow guide may be omitted.

The indoor unit 3200 of the air conditioner 3000 may include a flow path connecting the air inlet and the air outlet. The flow path may be provided so that air drawn in via the air inlet flows toward the air outlet. The blower and the indoor heat exchanger may be provided on the flow path.

The blower may include an indoor fan and a fan motor. For example, indoor fans may include an axial fan, a diagonal fan, a crossflow fan, and a centrifugal fan.

The indoor heat exchanger may be placed between the blower and the air outlet, or between the air inlet and the blower. The indoor heat exchanger may absorb heat from air drawn in through the air inlet or transfer heat to air drawn in through the air inlet. The indoor heat exchanger may include a heat exchange tube in which a refrigerant flows, and heat exchange fins provided to increase the heat transfer area.

The indoor unit 3200 of the air conditioner 3000 may include a drain tray located below the indoor heat exchanger to collect condensate water generated in the indoor heat exchanger. The condensate water collected in the drain tray may be drained to the outside via a drain hose. The drain tray may be provided to support the indoor heat exchanger.

The indoor unit 3200 of the air conditioner 3000 may include a first controller for controlling components of the indoor unit 3200, including the blower. The outdoor unit 3100 of the air conditioner 3000 may include a second controller for controlling components of the outdoor unit 3100, including the compressor and the like. The first controller may communicate with the second controller.

The first controller may obtain a user input via a user device including a mobile device, etc. or a remote controller, and the indoor unit 3200 may include a communication interface or infrared receiver capable of communicating with the user device or remote controller.

The first controller may control the components of the indoor unit 3200, including the blower, etc., in response to the received user input. The first controller may transmit information about the received user input to the second controller of the outdoor unit 3100. The second controller may control the components of the outdoor unit 3100, including the compressor, etc., based on the information about the user input received from the indoor unit 3200.

The first controller and the second controller may each include a processor and a memory. The first controller and the second controller may provide control signals to the compressor, the flow diverter valve, the expansion device, the outdoor fan, and the blower to drive the air conditioner 3000 in response to a user input.

The indoor unit 3200 of the air conditioner 3000 may include a display that displays operation information of the air conditioner 3000. The display may receive information about an operation of the air conditioner 3000 from the first controller and display information corresponding to the received information.

The display may include an indicator that show the type of an operation of the air conditioner 3000 selected by the user or whether the indoor unit 3200 is turned on or off. The indicator may include, for example, a liquid crystal display (LCD) panel, a light emitting diode panel (LED) panel, an organic LED (OLED) panel, a micro LED panel, and a plurality of LEDs.

In the air conditioner 3000, the motor 1000 including the improved annular magnetic pole body 2 may be used to operate the compressor.

Referring to FIG. 24, the air conditioner 3000 may include the outdoor unit 3100 provided in an outdoor space and including the outdoor heat exchanger for performing heat exchange between outdoor air and refrigerant, and an the indoor unit 3200 provided in an indoor (in-house) space and including an indoor heat exchanger for performing heat exchange between indoor air and refrigerant.

The outdoor unit 3100 includes an outdoor unit body 3101 that forms an exterior of the outdoor unit 3100, and an outdoor unit fan 3102 provided on one side of the outdoor unit body 3101 to discharge heat-exchanged air.

The indoor unit 3200 may include an indoor unit body 3201 that forms an exterior of the indoor unit 3200, an indoor unit outlet 3202 provided on a front of the indoor unit body 3201 to discharge heat-exchanged air, an input interface 3220 that receives operation commands for the air conditioner 3000, and an output interface 3210 that displays operation information of the air conditioner 3000.

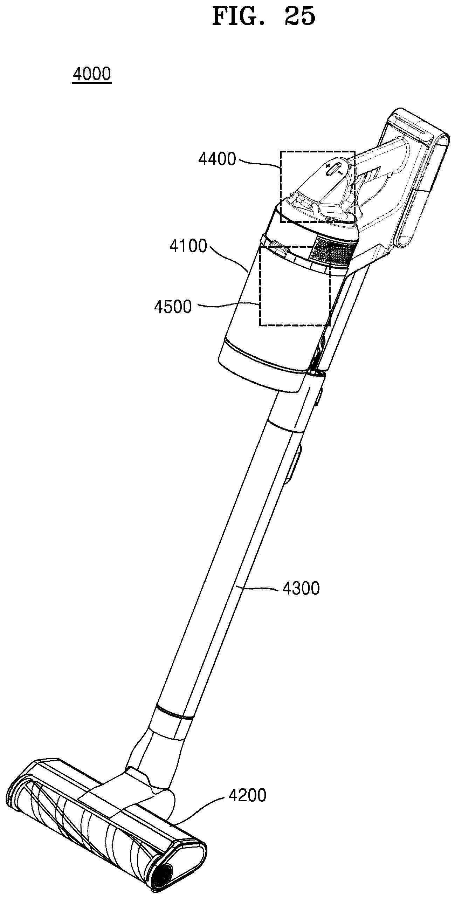

FIG. 25 is a perspective view illustrating a vacuum cleaner among home appliances, according to an embodiment of the disclosure.

Referring to FIG. 25, a home appliance according to an embodiment of the disclosure may include a vacuum cleaner 4000. The vacuum cleaner 4000 may include a cordless vacuum cleaner that has a built-in rechargeable battery and does not need to connect a power cord to an outlet during cleaning. In an embodiment of the disclosure, the vacuum cleaner 4000 may include a corded vacuum cleaner that connects its power cord to an outlet for use in cleaning. For convenience of description, as an example of the vacuum cleaner 4000, a cordless vacuum cleaner is described with reference to FIG. 25. The user may move the vacuum cleaner 4000 back and forth using a handle mounted on a cleaner main body to allow a brush device (a cleaner head) to suck up dust or debris from a surface to be cleaned.

According to an embodiment of the disclosure, the vacuum cleaner 4000 may be a stick-type cleaner including a cleaner main body 4100, a brush device 4200, and an extension pipe 4300. However, all of the components shown in FIG. 25 are not essential components. The vacuum cleaner 4000 may be implemented with more components than those shown in FIG. 25, or may be implemented with fewer components than the shown components. For example, the vacuum cleaner 4000 may be implemented with the cleaner main body 4100 and the brush device 4200, excluding the extension pipe 4300. The vacuum cleaner 4000 may further include a station (not shown) for ejecting dust from the cleaner main body 4100 and charging a battery.

The vacuum cleaner 4000 may include a user interface 4400. The user interface 4400 allows the user to selectively enter a cleaning intensity during cleaning, and a display including the user interface 4400 may indicate a charging status or cleaning mode.

The suction motor 4500 included in the main body 4100 of the vacuum cleaner 4000 performs an operation of sucking in dust during cleaning. As the suction motor 4500, the motor 1000 including the improved annular magnetic pole body 2 according to an embodiment of the disclosure may be used.

FIG. 26 is a block diagram of a configuration of a washing machine according to an embodiment of the disclosure.

According to an embodiment of the disclosure, a washing machine 1 of FIG. 26 may include a processor 1001, a communication interface 1100, a user interface 1200, a memory 1400, a motor driving device 250, and the motor 1000. According to an embodiment of the disclosure, the motor 1000 may include the annular magnetic pole body 2. The annular magnetic pole body 2 is a hybridized improved annular magnetic pole body according to an embodiment of the disclosure. Throughout this disclosure, the processor 1001 may correspond to a 'MICOM (or inverter MICOM and/or main MICOM)'. The processor 1001 may be a plurality of processors or a single processor.

The processor 1001 may control all operations of the washing machine 1. The processor 1001 is a hardware device that controls all operations of the washing machine 1. The processor 1001 is a hardware chip including an integrated circuit with integrated electrical circuits thereon.

The processor 1001 may include various processing circuits and/or a plurality of processors. For example, the term "processor" as used herein, including that in the claims, may include various processing circuits, including at least one processor. One or more processors in the at least one processor may be configured to perform various functions described herein, individually and/or collectively, in a distributed manner. As used herein, "processor," "at least one processor," and "one or more processors" may be configured to perform various functions. However, these terms cover, without limitation, situations where one processor performs some of the functions and another processor (other processors) performs other functions, and situations where a single processor may perform all of the functions. Furthermore, the at least one processor may include a combination of processors that perform various functions described herein in a distributed manner. The at least one processor may execute program instructions to achieve or perform various functions. The processor 1001 may execute programs stored in the memory 1400 to control the washing machine 1.

According to an embodiment of the disclosure, the washing machine 1 may be equipped with an artificial intelligence (AI) processor. The AI processor may be manufactured in the form of a dedicated hardware chip for AI, or be manufactured as part of an existing general-purpose processor (e.g., a central processing unit (CPU) or application processor (AP)) or a dedicated graphics processor (e.g., a graphics processing unit (GPU)) and mounted on the washing machine 1.

According to an embodiment of the disclosure, the processor 1001 may include at least one of a CPU, a GPU, an accelerated processing unit (APU), a Many Integrated Core (MIC), a digital signal processor (DSP), or a neural processing unit (NPU). The processor 1001 may be implemented in the form of an integrated system on a chip (SoC) including one or more electronic components. When the processor 1001 includes a plurality of processors, each of the processors may be implemented as a separate piece of hardware (H/W). The processor 1001 may also be referred to as a MICOM, a microprocessor unit (MPU), a microcontroller unit (MCU), or the like. The processor 1001 according to the disclosure may be implemented as a single-core processor or as a multi-core processor.

The washing machine 1 may selectively include a communication interface 1100 for communicating with an external device. For example, the washing machine 1 may communicate with an external server (not shown) and/or a user terminal (not shown) via the communication interface 1100. In this case, the communication interface 1100 may communicate with the server by using a first communication method (e.g., a Wi-Fi communication method) and with the user terminal by using a second communication method (e.g., a Bluetooth Low Energy (BLE) communication method).

The communication interface 1100 may include a short-range wireless communication interface 1110, a long-range wireless communication interface 1120, etc. The short-range communication interface 1110 may include, but is not limited to, a Bluetooth communication interface, a BLE communication interface, a near field communication (NFC) interface, wireless local area network (WLAN) (or Wi-Fi) communication interface, a Zig-Bee communication interface, an Infrared Data Association (IrDA) communication interface, a Wi-Fi Direct (WFD) communication interface, an ultra-wideband (UWB) communication interface, an Ant+ communication interface, etc. The long-range communication interface 1120 may be used by the washing machine 1 to remotely communicate with the server or user terminal. The long-range communication interface may include the Internet, a computer network (e.g., a LAN or a wide area network (WAN)), and a mobile communication interface. The mobile communication interface may include, but is not limited to, a third generation (3G) module, a fourth generation (4G) module, a fifth generation (5G) module, a long-term evolution (LTE) module, a narrowband IoT (NB-IoT) module, an LTE machine (LTE-M) module, etc.

The communication interface 1100 may transmit data to the processor 1001 by using, for example, a universal asynchronous receiver/transmitter (UART) protocol which is an asynchronous communication protocol, but the communication method is not limited thereto.

The user interface 1200 of the washing machine 1 may include an output interface 1210 and an input interface 1220. The input interface 1220 may be a device via which the user may input commands to the washing machine 1. The input interface 1220 may include, but is not limited to, a touch screen, voice input, or physical buttons. The input interface 1220 may include a washing start button, a drying start button, a mode selection button, etc. The output interface 1210 may include a display such as an LED, a LCD, a touch screen, or the like. The output interface 1210 may further include a voice output device, but is not limited thereto. The output interface 1210 may display software update progress information, operation event information, overheating information, information about at which point overheating occurs, etc., but is not limited thereto.

The memory 1400 of the washing machine 1 may store a program (e.g., one or more instructions) for the processor 1001 to control all operations of the washing machine 1, and pieces of input/output data. For example, the memory 1400 of the washing machine 1 may store, but is not limited to, software related to control of the washing machine 1, overheating status data, overheating history data, overheating location information data, error occurrence data (failure history data), and types of operation events. The memory 1400 may store data received from an external user terminal.

The memory 1400 may include at least one type of storage medium, i.e., at least one of a flash memory-type memory, a hard disk-type memory, a multimedia card micro-type memory, a card-type memory (e.g., an Secure Digital (SD) card or an eXtreme Digital (XD) memory), random access memory (RAM), static RAM (SRAM), read-only memory (ROM), electrically erasable programmable ROM (EEPROM), PROM, a magnetic memory, a magnetic disc, or an optical disc. Programs stored in the memory 1400 may be classified into a plurality of modules according to their functions.

The motor driving device 250 may include an inverter capable of driving the motor 1000 via pulse width modulation (PWM) switching of a direct current (DC) voltage obtained by rectifying input alternating current (AC) power. The motor driving device 250 may include a converter that converts a DC voltage to a different level of DC voltage. The motor driving device 250 may include not only a switch element but also a gate driver for switching the switch element, and may include dead-time compensation and overheating prevention functions.

The motor 1000 is a motor driven by the motor driving device 250 and may include the annular magnetic pole body 2 according to an embodiment of the disclosure. The annular magnetic pole body 2 may include the annular magnetic pole bodies of the disclosure described above with reference to FIGS. 16 to 22. In the case of the washing machine 1, the motor 1000 may be connected to a pulsator or drum that requires rotation. However, this only applies when a home appliance is the washing machine 1, and when the home appliance is not the washing machine 1 but a refrigerator, the motor 1000 may be a motor used in a compressor of the refrigerator, and when the home appliance is an air conditioner, the motor 1000 may be a motor that rotates a compressor, an outdoor unit fan, or an indoor unit fan. When the home appliance is a vacuum cleaner, the motor 1000 may be a suction motor of the vacuum cleaner.

Home appliances according to an embodiment of the disclosure may include not only the washing machine 1 but also various other home appliances that operate by driving the motor 1000. According to an embodiment of the disclosure, the home appliances according to an embodiment of the disclosure may include an air conditioner, a vacuum cleaner, a refrigerator, etc.

All of the components shown in FIG. 26 are not essential components. A home appliance may be implemented with more components than those shown in FIG. 26, or may be implemented with fewer components than the shown components.

Furthermore, the disclosure is not limited to the above-described embodiments of the disclosure, and includes various other configurations. For example, the pole-slot combinations and magnet arrangements in the embodiments of the disclosure may be appropriately modified according to the specifications of the motor 1000 within the scope to which the disclosure is applicable. In addition, in an embodiment of the disclosure, an outer rotor type motor in which the rotor 110 is located outside the stator 120 is illustrated, but the motor may be an inner rotor type motor where the rotor 110 is located inside the stator 120. The magnets may be rare earth magnets or plastic magnets.

According to an embodiment of the disclosure, a washing machine including a motor with an annular magnetic pole body is provided. According to one embodiment of the disclosure, the washing machine may include a casing, a laundry inlet configured to load laundry on a top or side of the casing, a door attached to the laundry inlet, a stationary tub capable of storing water for washing the laundry, a rotary tub composed of a container within the stationary tub and configured to be rotatable, and a motor configured to rotate the rotary tub. According to an embodiment of the disclosure, the motor of the washing machine may include a rotor configured to rotate about a rotation axis. According to an embodiment of the disclosure, the motor of the washing machine may include a stator facing the rotor with an air gap therebetween. According to an embodiment of the disclosure, in the motor of the washing machine, the rotor may include an annular magnetic pole body in which a plurality of magnets having an arc-shaped cross-section are arranged in a circumferential direction of the rotor. According to an embodiment of the disclosure, the annular magnetic pole body included in the motor of the washing machine may include two or more types of magnets having different numbers of magnetic poles.

According to an embodiment of the disclosure, in the motor of the washing machine, when p is the number of magnetic poles of the rotor and n is the number of slots in the stator, a first magnet among the plurality of magnets may have a number A (where A=p/|p-n| and is a natural number) of magnetic poles, and a second magnet among the plurality of magnets may have a number A+1 of magnetic poles.

According to the embodiment of the disclosure, in the motor of the washing machine, when p=48 and n=36, the number of first magnets with four magnetic poles may be 2, and the number of second magnets with five magnetic poles may be 8.

According to an embodiment of the disclosure, in the motor of the washing machine, when p is the number of magnetic poles of the rotor and n is the number of slots in the stator, a first magnet among the plurality of magnets may have a number A (where A=p/|p-n| and is a natural number) of magnetic poles, and a third magnet among the plurality of magnets may have a number A-1 of magnetic poles.

According to the embodiment of the disclosure, in the motor of the washing machine, when p=48 and n=36, the number of first magnets with four magnetic poles may be 9, and the number of third magnets with three magnetic poles may be 4.

According to an embodiment of the disclosure, in the motor of the washing machine, when p is the number of magnetic poles of the rotor and n is the number of slots in the stator is n, a first magnet among the plurality of magnets may have a number A (where A=p/|p-n| and is a natural number) of magnetic poles, a second magnet among the plurality of magnets may have a number A+1 of magnetic poles, and a third magnet among the plurality of magnets may have a number A-1 of magnetic poles.

According to the embodiment of the disclosure, in the motor of the washing machine, when p=48 and n=36, the number of first magnets with four magnetic poles may be 4, the number of second magnets with five magnetic poles may be 4, and the number of third magnets with three magnetic poles may be 4.

According to the embodiment of the disclosure, when p is the number of magnetic poles of the rotor and n is the number of slots in the stator, the motor of the washing machine may have a pole-slot combination such that a value of a magnetic pole pitch ($\beta$) is 2N (where $\beta$=p/|p-n| and N is a natural number).

According to an embodiment of the disclosure, in the motor of the washing machine, when the number p of magnetic poles in the rotor is 24 and the number n of slots in the stator is 36, the plurality of magnets may include three 5-pole magnets and three 3-pole magnets.

According to an embodiment of the disclosure, in the motor of the washing machine, when the number p of magnetic poles in the rotor is 32 and the number n of slots in the stator is 36, the plurality of magnets may include three 4-pole magnets and four 5-pole magnets.

According to an embodiment of the disclosure, in the motor of the washing machine, when the number p of magnetic poles in the rotor is 40 and the number n of slots in the stator is 36, the plurality of magnets may include five 4-pole magnets and four 5-pole magnets.

According to the embodiment of the disclosure, in the motor of the washing machine, when the number of magnetic poles of the rotor is p and the number of slots in the stator is n, the motor may have a slot combination such that a value of a magnetic pole pitch ($\beta$) is 2N (where $\beta$=p/|p-n| and N is a natural number).

According to an embodiment of the disclosure, in the motor of the washing machine, magnetic poles in each of the plurality of magnets may include a specific magnet pole located at an end of the same side of each magnet. According to an embodiment of the disclosure, in the motor of the washing machine, magnetic poles in the plurality of magnets may be sequentially classified into a plurality of groups including a first group to a $\beta$-th group corresponding to the value of the magnetic pole pitch ($\beta$), and when differences between numbers of specific magnetic poles included in each pair of two groups whose group numbers have a difference equal to N are summed together, the sum of the differences may be less than or equal to half the number of the plurality of magnets.

According to the embodiment of the disclosure, in the motor of the washing machine, when p is the number of magnetic poles of the rotor and n is the number of slots in the stator, the motor may have a slot combination such that the value of the magnetic pole pitch ($\beta$) is 4N (where $\beta$=p/|p-n| and N is a natural number). According to an embodiment of the disclosure, in the motor of the washing machine, magnetic poles in each of the plurality of magnets may include a specific magnet pole located at an end of the same side of each magnet, and magnetic poles in the plurality of magnets may be sequentially classified into a plurality of groups including a first group to a $\beta$-th group corresponding to the value of the magnetic pole pitch ($\beta$), and when differences between numbers of specific magnetic poles included in each pair of two groups whose group numbers have a difference equal to N are summed together, the sum of the differences may be less than or equal to half the number of the plurality of magnets.

According to an embodiment of the disclosure, a home appliance including a motor with an annular magnetic pole body is provided. According to an embodiment of the disclosure, the motor of the home appliance may include a rotor configured to rotate about a rotation axis. According to an embodiment of the disclosure, the motor of the home appliance may include a stator facing the rotor with an air gap therebetween. According to an embodiment of the disclosure, in the motor of the home appliance, the rotor may include an annular magnetic pole body in which a plurality of magnets having an arc-shaped cross-section are arranged in a circumferential direction of the rotor. According to an embodiment of the disclosure, the annular magnetic pole body included in the motor of the home appliance may include two or more types of magnets having different numbers of magnetic poles.

According to an embodiment of the disclosure, there is provided a home appliance including a motor with an annular magnetic pole body including at least two types of magnets having different numbers of magnetic poles. According to an embodiment of the disclosure, the motor is a surface permanent magnet synchronous motor, and may include a rotor rotating about a rotation axis and a stator facing the rotor with an air gap therebetween. According to an embodiment of the disclosure, in the motor, the stator may include a stator core having a plurality of teeth extending in a diameter direction, and a plurality of coils formed by inserting electric wires into slots formed between adjacent teeth. According to an embodiment of the disclosure, in the motor, the rotor may include an annular magnetic pole body, which is formed by arranging a plurality of magnets with an arc-shaped cross-section in a circumferential direction, on a side opposite to the stator. According to an embodiment of the disclosure, in the motor, each of the plurality of magnets may include two or more magnetic poles arranged in the circumferential direction, and the annular magnetic pole body may be composed of a combination of two or more types of the magnets with different numbers of magnetic poles.

According to an embodiment of the disclosure, when p is the number of magnetic poles of the rotor and n is the number of slots in the stator, the motor with the annular magnetic pole body including the at least two types of the magnets with different numbers of magnetic poles may include a magnet having a number A of magnetic poles equal to p/|p-n| (where p/|p-n| is a natural number), and a magnet having a number A±1 of magnetic poles.

According to an embodiment of the disclosure, when p is the number of magnetic poles of the rotor and n is the number of slots in the stator, the motor with the annular magnetic pole body including the at least two types of the magnets with different numbers of magnetic poles may have a pole-slot combination such that a value of a magnetic pole pitch (β) expressed as p/|p-n| is 2N (where N a natural number).

According to an embodiment of the disclosure, the motor with the annular magnetic pole body including the at least two types of the magnets with different numbers of magnetic poles may be configured so that, when magnetic poles in each of the magnets may include a specific magnet pole located at an end of the same side of each magnet, magnetic poles in the annular magnetic pole body are periodically classified into groups having numbers ranging from 1 to the value of the magnetic pole pitch (β), and when differences between numbers of specific magnetic poles respectively included in each combination of two groups, whose group numbers have a difference equal to the natural number N, are summed together, the sum of the differences is less than or equal to half the number of the magnets.

According to an embodiment of the disclosure, when p is the number of magnetic poles of the rotor and n is the number of slots in the stator, the motor with the annular magnetic pole body including the at least two types of the magnets with different numbers of magnetic poles may have a pole-slot combination such that the value of the magnetic pole pitch (β) expressed as p/|p-n| is 4N (where N a natural number).

According to an embodiment of the disclosure, the motor with the annular magnetic pole body including the at least two types of the magnets with different numbers of magnetic poles may be configured so that, when magnetic poles in each of the magnets may include a specific magnet pole located at an end of the same side of each magnet, magnetic poles in the annular magnetic pole body are periodically classified into groups having numbers ranging from 1 to the value of the magnetic pole pitch (β), and when differences between numbers of specific magnetic poles respectively included in each combination of two groups, whose group numbers have a difference equal to the natural number N, are summed together, the sum of the differences is less than or equal to half the number of the magnets.

According to an embodiment of the disclosure, in the motor with the annular magnetic pole body including the at least two types of the magnets with different numbers of magnetic poles, the rotor may be located outside the stator so that a surface of the rotor facing the stator may constitute an inner circumferential surface of the rotor.

According to an embodiment of the disclosure, the motor with the annular magnetic pole body including the at least two types of the magnets with different numbers of magnetic poles may be installed in a washing machine and rotationally drive a washing tub of the washing machine.

A method according to an embodiment of the disclosure may be implemented in the form of program commands executable by various types of computers and may be recorded on computer-readable recording media. The computer-readable recording media may include program commands, data files, data structures, etc. either alone or in combination. The program commands recorded on the computer-readable recording media may be designed and configured specially for the disclosure or may be known to and be usable by those of skill in the art of computer software. Examples of the computer-readable recording media include magnetic media such as hard disks, floppy disks, and magnetic tapes, optical media such as compact disk ROM (CD-ROM) and digital versatile disks (DVDs), magneto-optical media such as floptical disks, and hardware devices that are specially configured to store and perform program commands, such as ROM, RAM, flash memory, etc. Examples of program commands include not only machine code such as that created by a compiler but also high-level language code that may be executed by a computer using an interpreter or the like.

Some embodiments of the disclosure may also be implemented in the form of recording media including instructions executable by a computer, such as a program module executed by the computer. The computer-readable recording media may be any available media that are accessible by a computer and include both volatile and nonvolatile media and both removable and non-removable media. Furthermore, the computer-readable recording media may include both computer storage media and communication media. The computer storage media include both volatile and nonvolatile, removable and non-removable media implemented using any method or technology for storage of information such as computer-readable instructions, data structures, program modules, or other data. The communication media typically embody computer-readable instructions, data structures, program modules, other data in a modulated data signal such as a carrier wave, or other transmission mechanism, and may include any information transmission media. Furthermore, some embodiments of the disclosure may also be implemented as a computer program product or computer program including instructions executable by a computer.

A machine-readable storage medium may be provided in the form of a non-transitory storage medium. In this regard, the term 'non-transitory storage medium' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer for temporarily storing data.

According to an embodiment of the disclosure, methods according to the embodiments of the disclosure may be included in a computer program product when provided. The computer program product may be traded, as a product, between a seller and a buyer. The computer program product may be distributed in the form of a machine-readable storage medium (e.g., CD-ROM) or distributed (e.g., downloaded or uploaded) on-line via an application store or directly between two user devices (e.g., smartphones). For online distribution, at least a part of the computer program product (e.g., a downloadable app) may be at least transiently stored or temporally generated in the machine-readable storage medium such as a memory of a server of a manufacturer, a server of an application store, or a relay server.

## Claims

1. A washing machine comprising:

   a casing;
   a laundry inlet configured to load laundry on a top or side of the casing;
   a door attached to the laundry inlet;
   a stationary tub capable of storing water for washing the laundry;
   a rotary tub formed as a container within the stationary tub and configured to be rotatable; and
   a motor configured to rotate the rotary tub.
   wherein the motor comprises a rotor configured to rotate about a rotation axis, and a stator configured to face the rotor with an air gap therebetween, and
   wherein the rotor includes an annular magnetic pole body in which a plurality of magnets having an arc-shaped cross-section are arranged in a circumferential direction of the rotor, wherein the plurality of magnets of the annular magnetic pole body comprise two or more types of magnets having different numbers of magnetic poles.

2. The washing machine of claim 1, wherein, when p is a number of magnetic poles of the rotor and n is a number of slots in the stator, first magnets among the plurality of magnets has a number A (where A=p/|p-n| and is a natural number) of magnetic poles, and second magnets among the plurality of magnets has a number A+1 of magnetic poles.

3. The washing machine of claim 2, wherein, when p is 48 and n is 36, a number of the first magnets with four magnetic poles is 2, and a number of the second magnets with five magnetic poles is 8.

4. The washing machine of claim 1, wherein, when p is a number of magnetic poles of the rotor and n is a number of slots in the stator, a first magnet among the plurality of magnets has a number A (where A=p/|p-n| and is a natural number) of magnetic poles, and third magnets among the plurality of magnets has a number A-1 of magnetic poles.

5. The washing machine of claim 4, wherein, when p is 48 and n is 36, a number of the first magnets with four magnetic poles is 9, and a number of the third magnets with three magnetic poles is 4.

6. The washing machine of claim 1, wherein, when p is a number of magnetic poles of the rotor and n is a number of slots in the stator, a first magnet among the plurality of magnets has a number A (where A=p/|p-n| and is a natural number) of magnetic poles, a second magnet among the plurality of magnets has a number A+1 of magnetic poles, and a third magnet among the plurality of magnets has a number A-1 of magnetic poles.

7. The washing machine of claim 6, wherein, when p is 48 and n is 36, a number of the first magnets with four magnetic poles may be 4, a number of the second magnets with five magnetic poles is 4, and a number of the third magnets with three magnetic poles is 4.

8. The washing machine of any one of claims 2 to 4, wherein the motor has a slot combination such that a value of a magnetic pole pitch ($\beta$) is 2N (where $\beta$=p/|p-n| and N is a natural number).

9. The washing machine of claim 1, wherein, when a number p of magnetic poles in the rotor is 24 and a number n of slots in the stator is 36, the plurality of magnets comprise three 5-pole magnets and three 3-pole magnets.

10. The washing machine of claim 1, wherein, when a number p of magnetic poles in the rotor is 32 and a number n of slots in the stator is 36, the plurality of magnets comprise three 4-pole magnets and four 5-pole magnets.

11. The washing machine of claim 1, wherein, when a number p of magnetic poles in the rotor is 40 and a number n of slots in the stator is 36, the plurality of magnets comprise five 4-pole magnets and four 5-pole magnets.

12. The washing machine of claim 1, wherein, when p is a number of magnetic poles of the rotor and n is a number of slots in the stator,
the motor has a slot combination such that a value of a magnetic pole pitch ($\beta$) is 2N (where $\beta=p/|p-n|$ and N is a natural number).

13. The washing machine of claim 12, wherein magnetic poles in each of the plurality of magnets include a specific magnet pole located at an end of the same side of each magnet, and
magnetic poles in the plurality of magnets are sequentially classified into a plurality of groups including a first group to a $\beta$-th group corresponding to the value of the magnetic pole pitch ($\beta$), and when differences between numbers of specific magnetic poles included in each pair of two groups whose group numbers have a difference equal to N are summed together, the sum of the differences is less than or equal to half a number of the plurality of magnets.

14. The washing machine of claim 1, wherein, when p is a number of magnetic poles of the rotor and n is a number of slots in the stator,

the motor has a pole-slot combination such that a value of a magnetic pole pitch ($\beta$) is 4N (where $\beta=p/|p-n|$ and N is a natural number),
magnetic poles in each of the plurality of magnets include a specific magnet pole located at an end of the same side of each magnet, and
magnetic poles in the plurality of magnets are sequentially classified into a plurality of groups including a first group to a $\beta$-th group corresponding to the value of the magnetic pole pitch ($\beta$), and when differences between numbers of specific magnetic poles included in each pair of two groups whose group numbers have a difference equal to N are summed together, the sum of the differences is less than or equal to half a number of the plurality of magnets.

15. A home appliance including a motor, wherein the motor comprises:

a rotor rotating about a rotation axis; and
a stator configured to face the rotor with an air gap therebetween,
wherein the rotor includes an annular magnetic pole body in which a plurality of magnets having an arc-shaped cross-section are arranged in a circumferential direction of the rotor, and
wherein the annular magnetic pole body includes two or more types of magnets having different numbers of magnetic poles.

# FIG. 1A

# FIG. 1B

# FIG. 2A

# FIG. 2B

# FIG. 3

(a) MISALIGNMENT IN MAGNETIC FLUX:
   0 DEGREES (MECHANICAL ANGLE)

COGGING TORQUE
(N·m)

ELECTRICAL ANGLE (deg.)

(b) DEVIATION IN MAGNETIC FLUX:
   0.35 DEGREES (MECHANICAL ANGLE)

COGGING TORQUE
(N·m)

ELECTRICAL ANGLE (deg.)

# FIG. 4

MISALIGNMENT OF
MAGNETIZING YOKE(deg.)

■ NO
MISALIGNMENT          0.05    0.1    0.15    0.2    0.25    0.3    0.35    0.4    0.45    0.5

COGGING TORQUE
(N·m)

HARMONIC ORDER (f)

# FIG. 5

HYBRIDIZED ANNULAR MAGNETIC POLE BODY
(FIRST PATTERN)

# FIG. 6

HYBRIDIZED ANNULAR MAGNETIC
POLE BODY (SECOND PATTERN)

# FIG. 7

(a) HYBRIDIZED ANNULAR MAGNETIC POLE BODY
   (SECOND PATTERN)

COGGING TORQUE
(N·m)

ELECTRICAL ANGLE (deg.)

(b) MISALIGNMENT IN MAGNETIC FLUX:
   0.35 DEGREES (MECHANICAL ANGLE)

COGGING TORQUE
(N·m)

ELECTRICAL ANGLE (deg.)

FIRST PATTERN : SOLID LINE
SECOND PATTERN : DASHED LINE

# FIG. 8

# FIG. 9

SECOND PATTERN

MISALIGNMENT OF
MAGNETIZING YOKE(deg.)

■ NO MISALIGNMENT    0.05    0.1    0.15    0.2    0.25    0.3    0.35    0.4    0.45    0.5

COGGING TORQUE
(N·m)

HARMONIC ORDER (f)

## FIG. 10

$$T_{cog}(\theta) = \sum_{i=1}^{p} F_i(\theta) \qquad \cdots\cdots(1)$$

$$T_{cog}(\theta) = \sum_{i=1}^{p} \alpha_i F_1(\theta + i\delta) \qquad \delta = 2\pi\frac{p-n}{pn} \qquad \cdots\cdots(2)$$

$$F_1(\theta) = \sum_{j=0}^{\infty} A_j \cos(nj\theta + \varphi_j) \qquad \cdots\cdots(3)$$

$$T_{cog}(\theta) = \sum_{i=1}^{p} \alpha_i \sum_{j=0}^{\infty} A_j \cos\{nj(\theta+i\delta) + \varphi_j\} = \sum_{i=1}^{p} \alpha_i \sum_{j=0}^{\infty} A_j \cos\left\{nj\left(\theta + 2\pi i\frac{p-n}{pn}\right) + \varphi_j\right\}$$
$$\cdots\cdots(4)$$

FIG. 11

$$\beta = \frac{2\pi}{n|\delta|} = \frac{p}{|p-n|}$$

EP 4 663 838 A1

| POLE-SLOT COMBINATION | | $p=48$ $n=36$ | $p=44$ $n=36$ | $p=42$ $n=36$ | $p=40$ $n=36$ | $p=32$ $n=36$ | $p=30$ $n=36$ | $p=28$ $n=36$ | $p=24$ $n=36$ |
|---|---|---|---|---|---|---|---|---|---|
| POLE PITCH | $\dfrac{p}{|p-n|}$ | 4 | 5.5 | 7 | 10 | 8 | 5 | 3.5 | 2 |
| OUT-OF-PHASE PITCH FOR N-TH ORDER | $\dfrac{p}{2|p-n|}$ | 2 | — | — | 5 | 4 | — | — | 1 |
| OUT-OF-PHASE PITCH FOR 2N-TH ORDER | $\dfrac{p}{4|p-n|}$ | 1 | — | — | — | 2 | — | — | — |

# FIG. 12

<COMPARATIVE EXAMPLE : WITH NO MAGNETIZATION IMBALANCE>

# FIG. 13

<COMPARATIVE EXAMPLE : WITH MAGNETIC IMBALANCE >

# FIG. 14

<EMBODIMENT OF THE DISCLOSURE:
FIRST PATTERN WITH MAGNETIZATION IMBALANCE >

# FIG. 15

COMPARATIVE EXAMPLE: CONVENTIONAL MOTOR (TWELVE 4-POLE MAGNETS)

| | | POLE GROUP | | | | | | | | | | | | | | | | | | | | | | | |
|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| POLE NUMBER | 1 | 0 | | | | 0 | | | | 0 | | | | 0 | | | | 0 | | | | 0 | | | |
| | 2 | | 0 | | | | 0 | | | | 0 | | | | 0 | | | | 0 | | | | 0 | | |
| | 3 | | | 0 | | | | 0 | | | | 0 | | | | 0 | | | | 0 | | | | 0 | |
| | 4 | | | | 1 | | | | 1 | | | | 1 | | | | 1 | | | | 1 | | | | 1 |

| | | POLE GROUP | | | | | | | | | | | | | | | | | | | | | | | | TOTAL |
|---|---|---|---|---|---|---|---|---|---|---|---|---|---|---|---|---|---|---|---|---|---|---|---|---|---|---|
| | | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | |
| POLE NUMBER | 1 | 0 | | | | 0 | | | | 0 | | | | 0 | | | | 0 | | | | 0 | | | | 0 |
| | 2 | | 0 | | | | 0 | | | | 0 | | | | 0 | | | | 0 | | | | 0 | | | 0 |
| | 3 | | | 0 | | | | 0 | | | | 0 | | | | 0 | | | | 0 | | | | 0 | | 0 |
| | 4 | | | | 1 | | | | 1 | | | | 1 | | | | 1 | | | | 1 | | | | 1 | 12 |

EP 4 663 838 A1

## FIG. 16

EMBODIMENT 1: FIRST PATTERN (TWO 4-POLE MAGNETS + EIGHT 5-POLE MAGNETS)

| POLE NUMBER | POLE GROUP | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 0 | | | | 1 | | | | 0 | | | | 0 | | | | 0 | | | | 0 | | | |
| 2 | | 0 | | | | 0 | | | | 1 | | | | 0 | | | | 0 | | | | 0 | | |
| 3 | | | 0 | | | | 0 | | | | 0 | | | | 1 | | | | 0 | | | | 0 | |
| 4 | | | | 0 | | | | 0 | | | | 0 | | | | 0 | | | | 1 | | | | 0 |

| POLE NUMBER | POLE GROUP | | | | | | | | | | | | | | | | | | | | | | | | TOTAL |
|---|---|---|---|---|---|---|---|---|---|---|---|---|---|---|---|---|---|---|---|---|---|---|---|---|---|
| | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | |
| 1 | 1 | | | | 0 | | | | 0 | | | | 0 | | | | 0 | | | | 0 | | | | 2 |
| 2 | | 0 | | | | 1 | | | | 0 | | | | 0 | | | | 0 | | | | 0 | | | 2 |
| 3 | | | 0 | | | | 0 | | | | 1 | | | | 1 | | | | 0 | | | | 0 | | 3 |
| 4 | | | | 0 | | | | 0 | | | | 0 | | | | 0 | | | | 1 | | | | 1 | 3 |

EP 4 663 838 A1

# FIG. 17

EMBODIMENT 2: SECOND PATTERN (FOUR 3-POLE MAGNETS + NINE 4-POLE MAGNETS)

| | | POLE GROUP | | | | | | | | | | | | | | | | | | | | | | | |
|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| POLE NUMBER | 1 | 0 | | | | 0 | | | | 0 | | | | 0 | | | | 0 | | | | 0 | | | |
| | 2 | | 0 | | | | 0 | | | | 0 | | | | 1 | | | | 1 | | | | 1 | | |
| | 3 | | | 1 | | | | 1 | | | | 1 | | | | 0 | | | | 0 | | | | 0 | |
| | 4 | | | | 0 | | | | 0 | | | | 0 | | | | 0 | | | | 0 | | | | 0 |

| | | POLE GROUP | | | | | | | | | | | | | | | | | | | | | | | | TOTAL |
|---|---|---|---|---|---|---|---|---|---|---|---|---|---|---|---|---|---|---|---|---|---|---|---|---|---|---|
| | | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | |
| POLE NUMBER | 1 | 1 | | | | 1 | | | | 1 | | | | 0 | | | | 0 | | | | 0 | | | | 3 |
| | 2 | | 0 | | | | 0 | | | | 0 | | | | 0 | | | | 0 | | | | 0 | | | 3 |
| | 3 | | | 0 | | | | 0 | | | | 0 | | | | 0 | | | | 0 | | | | 0 | | 3 |
| | 4 | | | | 0 | | | | 0 | | | | 1 | | | | 1 | | | | 1 | | | | 1 | 4 |

# FIG. 18

EMBODIMENT 3: FIRST PATTERN (TWO 4-POLE MAGNETS + EIGHT 5-POLE MAGNETS)

| | | POLE GROUP | | | | | | | | | | | | | | | | | | | | | | |
|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| POLE NUMBER | 1 | 0 | | | | 0 | | | | 1 | | | | 0 | | | | 0 | | | | 0 | | | |
| | 2 | | 0 | | | | 0 | | | | 0 | | | | 1 | | | | 1 | | | | 0 | | |
| | 3 | | | 0 | | | | 0 | | | | 0 | | | | 0 | | | | 0 | | | | 1 | |
| | 4 | | | | 1 | | | | 0 | | | | 0 | | | | 0 | | | | 0 | | | | 0 |

| | | POLE GROUP | | | | | | | | | | | | | | | | | | | | | | | TOTAL |
|---|---|---|---|---|---|---|---|---|---|---|---|---|---|---|---|---|---|---|---|---|---|---|---|---|---|
| | | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | |
| POLE NUMBER | 1 | 0 | | | | 0 | | | | 1 | | | | 0 | | | | 0 | | | | 0 | | | | 2 |
| | 2 | | 0 | | | | 0 | | | | 0 | | | | 1 | | | | 0 | | | | 0 | | | 3 |
| | 3 | | | 0 | | | | 0 | | | | 0 | | | | 0 | | | | 1 | | | | 0 | | 2 |
| | 4 | | | | 1 | | | | 0 | | | | 0 | | | | 0 | | | | 0 | | | | 1 | 3 |

EP 4 663 838 A1

# FIG. 19

EMBODIMENT 4: FIRST PATTERN 24p36n (THREE 5-POLE MAGNETS + THREE 3-POLE MAGNETS)

| | | POLE GROUP | | | | | | | | | | | | | | | | | | | | | | | | TOTAL |
|---|---|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | |
| POLE NUMBER | 1 | 0 | | 0 | | 1 | | 0 | | 0 | | 0 | | 1 | | 0 | | 0 | | 0 | | 1 | | 0 | | 3 |
| | 2 | | 0 | | 0 | | 0 | | 1 | | 0 | | 0 | | 0 | | 1 | | 0 | | 0 | | 0 | | 1 | 3 |

EP 4 663 838 A1

# FIG. 20

EMBODIMENT 5: 32p36n (THREE 4-POLE MAGNETS + FOUR 5-POLE MAGNETS)

| | | POLE GROUP | | | | | | | | | | | | | | | | | | | | | | | | | | | | | | | | TOTAL |
|---|---|---|---|---|---|---|---|---|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | |
| POLE NUMBER | 1 | 0 | | | | | | | | 1 | | | | | | | | 0 | | | | | | | | 0 | | | | | | | | 1 |
| | 2 | | 0 | | | | | | | | 0 | | | | | | | | 1 | | | | | | | | 0 | | | | | | | 1 |
| | 3 | | | 0 | | | | | | | | 0 | | | | | | | | 0 | | | | | | | | 1 | | | | | | 1 |
| | 4 | | | | 0 | | | | | | | | 0 | | | | | | | | 0 | | | | | | | | 0 | | | | | 0 |
| | 5 | | | | | 1 | | | | | | | | 0 | | | | | | | | 0 | | | | | | | | 0 | | | | 1 |
| | 6 | | | | | | 0 | | | | | | | | 1 | | | | | | | | 0 | | | | | | | | 0 | | | 1 |
| | 7 | | | | | | | 0 | | | | | | | | 0 | | | | | | | | 1 | | | | | | | | 0 | | 1 |
| | 8 | | | | | | | | 0 | | | | | | | | 0 | | | | | | | | 0 | | | | | | | | 1 | 1 |

## FIG. 21

EMBODIMENT 6: 40p36n (FIVE 4-POLE MAGNETS + FOUR 5-POLE MAGNETS)

| POLE NUMBER | POLE GROUP 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|
| 1 | 0 | | | | | | | | | | 0 | | | | | | | | | |
| 2 | | 0 | | | | | | | | | | 0 | | | | | | | | |
| 3 | | | 0 | | | | | | | | | | 1 | | | | | | | |
| 4 | | | | 1 | | | | | | | | | | 0 | | | | | | |
| 5 | | | | | 0 | | | | | | | | | | 0 | | | | | |
| 6 | | | | | | 0 | | | | | | | | | | 0 | | | | |
| 7 | | | | | | | 0 | | | | | | | | | | 0 | | | |
| 8 | | | | | | | | 0 | | | | | | | | | | 1 | | |
| 9 | | | | | | | | | 1 | | | | | | | | | | 0 | |
| 10 | | | | | | | | | | 0 | | | | | | | | | | 0 |

| POLE NUMBER | POLE GROUP 21 | 22 | 23 | 24 | 25 | 26 | 27 | 28 | 29 | 30 | 31 | 32 | 33 | 34 | 35 | 36 | 37 | 38 | 39 | 40 | TOTAL |
|---|---|---|---|---|---|---|---|---|---|---|---|---|---|---|---|---|---|---|---|---|---|
| 1 | 0 | | | | | | | | | | 1 | | | | | | | | | | 1 |
| 2 | | 1 | | | | | | | | | | 0 | | | | | | | | | 1 |
| 3 | | | 0 | | | | | | | | | | 0 | | | | | | | | 1 |
| 4 | | | | 0 | | | | | | | | | | 0 | | | | | | | 1 |
| 5 | | | | | 0 | | | | | | | | | | 0 | | | | | | 0 |
| 6 | | | | | | 0 | | | | | | | | | | 1 | | | | | 1 |
| 7 | | | | | | | 1 | | | | | | | | | | 0 | | | | 1 |
| 8 | | | | | | | | 0 | | | | | | | | | | 0 | | | 1 |
| 9 | | | | | | | | | 0 | | | | | | | | | | 0 | | 1 |
| 10 | | | | | | | | | | 0 | | | | | | | | | | 1 | 1 |

EP 4 663 838 A1

## FIG. 22

EMBODIMENT 7: 48p36n (FOUR 3-POLE MAGNETS + FOUR 4-POLE MAGNETS + FOUR 5-POLE MAGNETS)

| k | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|----|----|----|----|----|----|----|----|----|----|----|----|----|----|----|
| 1 | 0 | | | | 0 | | | | 0 | | | | 1 | | | | 1 | | | | 0 | | | |
| 2 | | 0 | | | | 0 | | | | 1 | | | | 0 | | | | 0 | | | | 1 | | |
| 3 | | | 0 | | | | 1 | | | | 0 | | | | 0 | | | | 0 | | | | 0 | |
| 4 | | | | 1 | | | | 0 | | | | 0 | | | | 0 | | | | 0 | | | | 0 |

| k | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | TOTAL |
|---|----|----|----|----|----|----|----|----|----|----|----|----|----|----|----|----|----|----|----|----|----|----|----|----|-------|
| 1 | 0 | | | | 0 | | | | 0 | | | | 0 | | | | 1 | | | | 1 | | | | 4 |
| 2 | | 0 | | | | 0 | | | | 0 | | | | 0 | | | | 0 | | | | 0 | | | 2 |
| 3 | | | 1 | | | | 0 | | | | 0 | | | | 0 | | | | 0 | | | | 0 | | 2 |
| 4 | | | | 0 | | | | 1 | | | | 1 | | | | 0 | | | | 0 | | | | 1 | 4 |

EP 4 663 838 A1

# FIG. 23A

# FIG. 23B

2000

# FIG. 24

# FIG. 25

4000

4400

4100

4500

4300

4200

# FIG. 26

## INTERNATIONAL SEARCH REPORT

| International application No. |
| --- |
| **PCT/KR2024/007256** |

**A. CLASSIFICATION OF SUBJECT MATTER**

**D06F 37/30**(2006.01)i; **D06F 37/06**(2006.01)i; **D06F 37/26**(2006.01)i; **F24F 1/02**(2011.01)i; **F25D 31/00**(2006.01)i; **A47L 9/00**(2006.01)i

According to International Patent Classification (IPC) or to both national classification and IPC

**B. FIELDS SEARCHED**

Minimum documentation searched (classification system followed by classification symbols)

D06F 37/30(2006.01); D06F 17/06(2006.01); D06F 37/12(2006.01); D06F 7/00(2006.01); H02K 1/14(2006.01); H02K 1/27(2006.01); H02K 16/02(2006.01); H02K 21/22(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 세탁기(washing machine), 모터(motor), 로터(rotor), 고정자(stator), 마그넷(magnet), 자극수(pole number)

**C. DOCUMENTS CONSIDERED TO BE RELEVANT**

| Category* | Citation of document, with indication, where appropriate, of the relevant passages | Relevant to claim No. |
| --- | --- | --- |
| X | US 2010-0126234 A1 (MAEKAWA, Sari) 27 May 2010 (2010-05-27)<br>See paragraphs [0030]-[0031], [0035]-[0036], [0053], [0070] and [0072] and figures 1, 8A-9B and 11. | 1-15 |
| A | KR 10-2017-0012016 A (SAMSUNG ELECTRONICS CO., LTD.) 02 February 2017 (2017-02-02)<br>See paragraphs [0085]-[0109]. | 1-15 |
| A | JP 2005-160275 A (MATSUSHITA ELECTRIC IND. CO., LTD.) 16 June 2005 (2005-06-16)<br>See paragraphs [0046]-[0049]. | 1-15 |
| A | KR 10-1228043 B1 (AMOTECH CO., LTD.) 30 January 2013 (2013-01-30)<br>See paragraphs [0032]-[0035]. | 1-15 |
| A | JP 7186499 B2 (SAMSUNG ELECTRONICS CO., LTD.) 09 December 2022 (2022-12-09)<br>See paragraphs [0160]-[0169]. | 1-15 |

☐ Further documents are listed in the continuation of Box C.　　☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **29 August 2024** | **29 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/007256**

| Patent document cited in search report | | | Publication date (day/month/year) | Patent family member(s) | | | Publication date (day/month/year) |
|---|---|---|---|---|---|---|---|
| US | 2010-0126234 | A1 | 27 May 2010 | CN | 101741196 | A | 16 June 2010 |
| | | | | CN | 101741196 | B | 14 November 2012 |
| | | | | JP | 2010-130719 | A | 10 June 2010 |
| | | | | JP | 4837020 | B2 | 14 December 2011 |
| | | | | US | 8354766 | B2 | 15 January 2013 |
| KR | 10-2017-0012016 | A | 02 February 2017 | EP | 3316458 | A1 | 02 May 2018 |
| | | | | EP | 3316458 | B1 | 20 November 2019 |
| | | | | JP | 2017-123767 | A | 13 July 2017 |
| | | | | JP | 2021-061751 | A | 15 April 2021 |
| | | | | JP | 6820090 | B2 | 27 January 2021 |
| | | | | KR | 10-2595183 | B1 | 30 October 2023 |
| | | | | US | 10753031 | B2 | 25 August 2020 |
| | | | | US | 2020-0080246 | A1 | 12 March 2020 |
| | | | | WO | 2017-014461 | A1 | 26 January 2017 |
| JP | 2005-160275 | A | 16 June 2005 | JP | 4437031 | B2 | 24 March 2010 |
| KR | 10-1228043 | B1 | 30 January 2013 | BR | 112013031240 | A2 | 24 January 2017 |
| | | | | BR | 112013031240 | B1 | 15 December 2020 |
| | | | | CN | 103597137 | A | 19 February 2014 |
| | | | | CN | 103597137 | B | 02 March 2016 |
| | | | | KR | 10-2012-0136081 | A | 18 December 2012 |
| | | | | US | 2014-0091662 | A1 | 03 April 2014 |
| | | | | US | 9896794 | B2 | 20 February 2018 |
| | | | | WO | 2012-169774 | A2 | 13 December 2012 |
| | | | | WO | 2012-169774 | A3 | 21 February 2013 |
| JP | 7186499 | B2 | 09 December 2022 | EP | 3711141 | A1 | 23 September 2020 |
| | | | | EP | 3711141 | B1 | 01 November 2023 |
| | | | | JP | 2019-110722 | A | 04 July 2019 |
| | | | | KR | 10-2019-0074957 | A | 28 June 2019 |
| | | | | KR | 10-2639683 | B1 | 23 February 2024 |
| | | | | US | 10826365 | B2 | 03 November 2020 |
| | | | | US | 2019-0190362 | A1 | 20 June 2019 |
| | | | | WO | 2019-125006 | A1 | 27 June 2019 |

Form PCT/ISA/210 (patent family annex) (July 2022)